# EUROPEAN PATENT APPLICATION

(11) **EP 4 826 683 A1**
(43) Date of publication of application: **21.10.2026**
(21) Application number: 25751469.5
(22) Date of filing: 05.02.2025
(51) Int. Cl.: G06V 40/18

(54) **IRIS RECOGNITION METHOD AND APPARATUS, ELECTRONIC DEVICE, AND STORAGE MEDIUM**

(30) Priority: 07.02.2024 CN 202410173894
(71) Applicant: Tencent Technology (Shenzhen) Company Limited, Shenzhen, Guangdong 518057 (CN)
(72) Inventor: ZHANG, Xiaoyi, Shenzhen, Guangdong 518057 (CN); HOU, Jinkun, Shenzhen, Guangdong 518057 (CN); GUO, Runzeng, Shenzhen, Guangdong 518057 (CN); WANG, Shaoming, Shenzhen, Guangdong 518057 (CN); CUI, Qi, Shenzhen, Guangdong 518057 (CN)
(74) Representative: Gunzelmann, Rainer
(86) International application number: PCT/CN2025/075701
(87) International publication number: WO 2025/167869

(57) **Abstract**

The present application provides an iris recognition method and apparatus, an electronic device, and a storage medium. The method comprises: obtaining an iris image group acquired for an object to be recognized, wherein the iris image group comprises at least two iris images acquired at different acquisition angles for a same eye region of said object; performing stereo matching on the at least two iris images to obtain a disparity map between the at least two iris images, wherein the disparity map comprises disparity elements, and each disparity element represents a displacement amount in a specified direction between two pixel points corresponding to a same eye region element in the at least two iris images; in one iris image among the at least two iris images, determining a pupil edge on the basis of the displacement amounts; determining an iris region in the iris image on the basis of the pupil edge, and performing feature extraction on the iris region to obtain an iris feature; and performing identity recognition on said object on the basis of the iris feature.

## Description

### RELATED APPLICATION

This application claims priority to Chinese Patent Application No. 202410173894.8, filed with the China National Intellectual Property Administration on February 7, 2024 and entitled "IRIS RECOGNITION METHOD AND APPARATUS, ELECTRONIC DEVICE, AND STORAGE MEDIUM", which is incorporated herein by reference in its entirety.

### FIELD OF THE TECHNOLOGY

This disclosure relates to the field of image processing technologies, and in particular, to an iris recognition method and apparatus, an electronic device, and a storage medium.

### BACKGROUND

Iris recognition is a biological recognition technology in which the iris recognition is performed by analyzing an iris texture feature of an individual's eye. The iris recognition has features of high reliability and uniqueness and is widely applied to scenarios such as security authentication and identity verification. In some iris recognition methods, a pupil edge is located based on edge detection and morphology processing, and then an iris region is determined based on the located pupil edge to perform iris recognition. However, under conditions such as a pupil size change, a light change, and a blurred pupil edge, accuracy of the iris recognition is affected.

### SUMMARY

Embodiments of this application provide an iris recognition method and apparatus, an electronic device, and a storage medium to improve accuracy of iris recognition.

The iris recognition method provided in embodiments of this application includes:
obtaining a plurality of iris images corresponding to a first object, the plurality of iris images including at least two iris images acquired from different acquisition perspectives with respect to an eye region of the first object;
obtaining a disparity map between the at least two iris images through a stereo matching process, the disparity map including a disparity element representing a displacement amount in a displacement direction between two pixel points corresponding to a first element in the eye region in the at least two iris images;
determining, in a first iris image that is one of the at least two iris images, a pupil edge based on the displacement amount;
determining an iris region in the first iris image based on the pupil edge;
performing feature extraction on the iris region to obtain an iris feature for determining an identity associated with the first object.

An iris recognition apparatus provided in embodiments of this application includes:
an image obtaining unit, configured to obtain a plurality of iris images corresponding to a first object, the plurality of iris images including at least two iris images acquired from different acquisition perspectives with respect to an eye region of the first object;
a stereo matching unit, configured to obtain a disparity map between the at least two iris images through a stereo matching process, the disparity map including a disparity element representing a displacement amount in a displacement direction between two respective pixel points corresponding to a first element in the eye region in the at least two iris images;
a pupil locating unit, configured to determine, in a first iris image that is one of the at least two iris images, a pupil edge based on the displacement amount;
an iris feature extraction unit, configured to determine an iris region in the first iris image based on the pupil edge, and feature extraction on the iris region to obtain an iris feature; and
a recognition unit, configured to determine an identity associated with the first object based on the iris feature.

The electronic device provided in embodiments of this application includes a processor and a memory, the memory having a computer program stored therein, and the computer program, when executed by the processor, causing the processor to perform any one operation of the foregoing iris recognition method.

Embodiments of this application provide a computer-readable storage medium, including a computer program, the computer program, when run on an electronic device, causing the electronic device to perform any one operation of the foregoing iris recognition method.

Embodiments of this application provide a computer program product, including a computer program, the computer program being stored in a computer-readable storage medium, and when a processor of an electronic device reads the computer program from the computer-readable storage medium, the processor executing the computer program, causing the electronic device to perform any one operation of the foregoing iris recognition method.

According to embodiments of this application, when iris recognition is performed, stereo matching is performed between every two iris images in a group of iris images to finally locate a pupil edge, so that the pupil edge may be accurately located under different lighting conditions and different face poses and expressions with high robustness against interference factors, such as noise and being blocked. Therefore, based on this manner, the pupil edge may be located with an effectively reduced locating error.

### BRIEF DESCRIPTION OF THE DRAWINGS

Accompanying drawings described herein are used for further understanding this disclosure, which constitutes a part of this disclosure. One or more embodiments of this disclosure and descriptions thereof are used for explaining this disclosure and do not constitute any inappropriate limitation on this disclosure. In the accompanying drawings:
FIG. 1 is a schematic diagram of an example of an application scenario according to an embodiment of this disclosure.
FIG. 2 is a schematic diagram of an iris image of a human eye according to an embodiment of this disclosure.
FIG. 3 is a flowchart of an implementation of an iris recognition method according to an embodiment of this disclosure.
FIG. 4 is a schematic diagram of logic of stereo matching of four iris images according to an embodiment of this disclosure.
FIG. 5 is a schematic diagram of a grayscale histogram according to an embodiment of this disclosure.
FIG. 6 is a schematic diagram of two iris images according to an embodiment of this disclosure.
FIG. 7 is a schematic diagram of a rectification principle according to an embodiment of this disclosure.
FIG. 8 is a schematic diagram of an iris image before and after rectification according to an embodiment of this disclosure.
FIG. 9 is a schematic diagram of disparity map fusion according to an embodiment of this disclosure.
FIG. 10 is a flowchart of a method for locating a pupil edge according to an embodiment of this disclosure.
FIG. 11 is a schematic diagram of a manner for determining an iris region according to an embodiment of this disclosure.
FIG. 12 is a flowchart of a method for updating an iris region according to an embodiment of this disclosure.
FIG. 13 is a schematic diagram of a process of performing identity recognition on an object through feature matching according to an embodiment of this disclosure.
FIG. 14 is a schematic diagram of logic for dividing a candidate iris image set according to an embodiment of this disclosure.
FIG. 15 is a modular block diagram of an iris recognition process according to an embodiment of this disclosure.
FIG. 16 is a schematic diagram of a composition structure of an iris recognition apparatus according to an embodiment of this disclosure.
FIG. 17 is a schematic diagram of a composition structure of hardware of an electronic device to which one or more embodiments of this disclosure are applied.
FIG. 18 is a schematic diagram of a composition structure of hardware of another electronic device to which one or more embodiments of this disclosure are applied.

### DETAILED DESCRIPTION

To describe objectives, technical solutions, and advantages of one or more embodiments of this disclosure, the technical solutions of this disclosure are described in further detail below with reference to the accompanying drawings. Embodiments described herein are a part rather than all embodiments of this disclosure. All other embodiments obtained by a person of ordinary skill in the art based on embodiments described in this disclosure fall within the scope of this disclosure.

Some concepts involved in one or more embodiments of this disclosure are described below.

Pupil: A pupil may correspond to a small circular hole at the center of an iris in an eye of an animal or a human, which is a channel for light to enter the eye. Sphincter pupillae on the iris may contract to cause pupil constriction, and dilator pupillae contracts to cause pupil dilation. The dilation and constriction of the pupil may enable control of an amount of light entering the pupil.

Iris: An iris may correspond to an annular thin film including a pigment at the front of an eyeball, which is located outside the pupil and is circular. In some examples, a circle-center position of a circle in which the iris is located is the center of the pupil.

Iris recognition: Iris recognition may correspond to a biological recognition technology, in which identity recognition is performed on an individual by analyzing a texture feature of an iris of an eye.

Stereo matching: Stereo matching may correspond to a computer vision (CV) technology, in which a position of a corresponding point in an image is determined by comparing similarities in two stereo views, thereby implementing three-dimensional (3D) reconstruction or object locating.

Disparity map: A disparity map may correspond to an image, which represents a horizontal displacement amount between corresponding points in a left view and a right view. The disparity map may be configured to calculate depth information of an object, thereby implementing 3D reconstruction or object locating. In a process of stereo matching, the disparity map may be an expression form of a matching result. Each pixel value in the disparity map may represent a horizontal displacement amount of corresponding points in the left view and the right view, and a larger value may represent that an object is closer to an observer (for example, a binocular camera below).

Artificial intelligence (AI) may correspond to a theory, a method, a technology, and an application system that use a digital computer or a machine controlled by the digital computer to simulate, extend, and expand human intelligence, perceive an environment, obtain knowledge, and use knowledge to obtain an optimal result. In other words, the AI is a comprehensive technology in computer science and attempts to understand the essence of intelligence and produce a new intelligent machine that can respond in a manner similar to human intelligence. The AI is to study design principles and implementation methods of various intelligent machines to enable the machines to have functions of perception, reasoning, and decision-making. The AI technology is a comprehensive discipline and involves a wide range of fields including both the hardware-level technology and the software-level technology. Basic AI technologies may include technologies such as a sensor, a dedicated AI chip, cloud computing, distributed storage, a big data processing technology, an operating/interaction system, and electromechanical integration. AI software technologies may include several major directions such as a CV technology, a speech processing technology, a natural language processing (NLP) technology, and machine learning/deep learning. The technical solutions provided in one or more embodiments of this disclosure involve the CV technology, machine learning/deep learning, and the like in the AI.

The CV technology may correspond to a field of science that studies how to use a machine to "see", and furthermore, that uses a camera and a computer to replace human eyes to perform machine vision such as identification and measurement on a target, and further perform graphic processing, so that the computer processes the target into an image more suitable for human eyes to observe, or an image transmitted to an instrument for detection. As a scientific discipline, the CV may relate to a study on related theories and technologies, aiming to establish an AI system that can obtain information from images or multidimensional data. The CV technology may include technologies such as image processing, image recognition, image semantic understanding, image retrieval, video processing, video semantic understanding, video content/behavior identification, 3D object reconstruction, 3D technology, virtual reality, augmented reality, and simultaneous localization and mapping, and further includes common biometric recognition technologies, such as face identification and fingerprint identification.

The technical solutions provided in one or more embodiments of this disclosure involve image recognition in the CV technology. In an example, recognition is performed on an iris image acquired based on an object to be recognized, so as to implement identity recognition of the object.

The biometric recognition technology is a recognition technology that has risen in recent years, and simply put, is a recognition technology for performing an identity check by using a physiological feature of a creature. Compared with another identity recognition technology (such as a key and a password for a door lock), the biometric recognition technology enables higher stability, security, and portability.

An iris recognition technology is a biological recognition technology in which an iris texture feature of an eye of a creature is used for identity authentication. Compared with other biological recognition technologies such as face recognition, palmprint recognition, and fingerprint recognition, the iris recognition technology has unique advantages and is widely applied to security authentication and identity verification scenarios. First, the iris has strong biological activity and is symbiotic with human life phenomena. Therefore, replacing an image of a living iris with a photograph or a video may not be feasible. Next, the iris has strong stability. The iris is already formed before birth, is shaped 6-18 months after the birth, and may remain unchanged for life and is stable. Finally, the iris is unique. Information included in each iris is different and is random. Textures of irises of left and right eyes of the same person are not identical with each other.

In the iris recognition solution of one or more embodiments of this disclosure, stereo matching is performed between every two iris images in a group of iris images to finally locate a pupil edge, so that the pupil edge may be accurately located under different lighting conditions and different face poses and expressions, and a more accurate iris range can be determined, thereby improving iris recognition accuracy and enabling a good recognition effect even in complex conditions, such as a pupil size change, a light change, and a blurred pupil edge. In addition, the iris recognition solutions of embodiments may have high robustness against interference factors such as noise and being blocked. Moreover, the iris recognition solutions of embodiments may have higher real-time performance, may quickly perform pupil edge detection and locating, and can satisfy a requirement for a real-time application.

One or more embodiments of this disclosure are described below with reference to the accompanying drawings. The one or more embodiments described herein are merely used for illustrating and explaining this disclosure and are not intended to limit this disclosure, and one or more embodiments of this disclosure and features in embodiments may be combined with each other without conflicts.

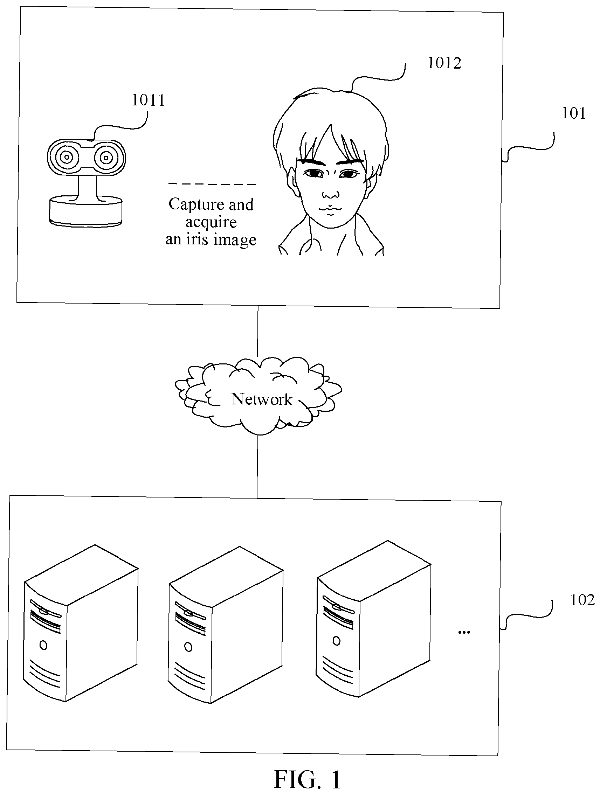

The solution provided in one or more embodiments of this disclosure may be applicable to iris recognition, for example, during identity recognition. As a basic technology, the solution may be applied to various scenarios, including but not limited to cloud technology, AI, intelligent transportation, assisted driving, and the like. FIG. 1 is a schematic diagram of an application scenario according to an embodiment of this disclosure. The diagram of the application scenario includes an iris acquisition device 101 and an iris recognition device 102.

As a front-end device, the iris acquisition device 101 may be configured to acquire an iris image of an eye region of an object whose identity is to be recognized and may include, but is not limited to, a dedicated device specially for iris image acquisition, a terminal device having an iris image acquisition function, or the like. The dedicated device may include, for example, a contact iris acquisition instrument, a smart iris-face all-in-one machine, a portable iris recognition device, a long-distance non-inductive iris acquisition and recognition device, or the like. The terminal device may include a mobile phone, a tablet computer (PAD), a notebook computer, a desktop computer, a smart on-board device, a smart voice interaction device, a smart household appliance, a smart wearable device, an aircraft, or the like.

Because of high security and accuracy, the iris recognition technology is widely applied to various fields. With the development of technologies, the iris acquisition device is continuously improved, and is more efficient and convenient and can adapt to various different application scenarios. When an iris acquisition device is selected, acquisition efficiency, accuracy, and portability of the device, and whether it satisfies a requirement for a specific application may be considered.

As shown in FIG. 1, an iris acquisition device, which is a binocular camera, is used as an example. As shown by 1011, a to-be-recognized object 1012 is captured through the binocular camera to acquire an iris image. The to-be-recognized object 1012 shown in FIG. 1 is a person. In addition, the iris recognition method in one or more embodiments of this disclosure is also applicable to another individual having an iris, such as another primate, another mammal, or a bird. Such details are not repeated herein.

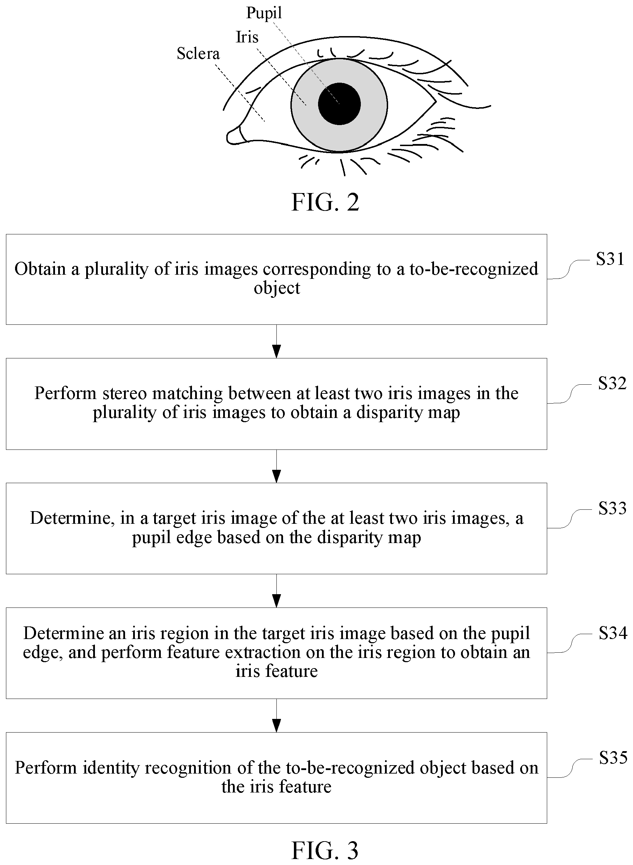

FIG. 2 is a schematic diagram of an iris image of a human eye according to an embodiment of this disclosure. The structure of the human eye is composed of parts such as the sclera, an iris, the pupil, the crystalline lens, and the retina. As shown in FIG. 2, the iris (a gray region in FIG. 2) is an annular part located between a black pupil and a white sclera and includes features such as speckles, filaments, crowns, stripes, and crypts that are staggered with each other. When irradiated with infrared light having a certain wavelength (e.g., between 700-900 nm), the iris may be in a radiated structure from the inside out. These fine features are referred to as texture features of the iris. The features have "uniqueness" and have important application values in various fields.

The iris image herein is merely a simple example, and in fact, detailed features such as a texture included in an iris may not be embodied in the accompanying drawings herein, which does not mean that the iris does not include these features.

The iris recognition device 102 may be any one of various electronic devices having an iris recognition function, such as a security and access control system or an identity authentication device, or may be a terminal device, a server, or the like. Using an example in which the iris recognition device 102 is the server, the server may be an independent physical server, or may be a server cluster or a distributed system formed by two physical servers, or may be a cloud server that provides basic cloud computing services such as a cloud service, a cloud database, cloud computing, a cloud function, cloud storage, a network service, cloud communication, a middleware service, a domain name service, a security service, a content delivery network (CDN), big data, and an AI platform.

If the iris acquisition device is the terminal device, a client related to iris recognition may also be installed on the terminal device. The client may be software (for example, payment software or iris recognition software), or may be a web page, a mini program, or the like. Correspondingly, the server is a background server corresponding to the software, the web page, the mini program, or the like, or is a server specially for performing iris recognition. This is not limited in this disclosure.

During actual application, the iris acquisition device 101 may provide an acquired group of iris images, including at least two iris images, to the iris recognition device 102. Then, the iris recognition device 102 performs stereo matching on every two iris images in the group of iris images by using the iris recognition method of one or more embodiments of this disclosure to obtain a corresponding disparity map; locates a pupil edge from any one iris image included in the group of iris images based on the obtained disparity map; determines an iris region in any one iris image based on the pupil edge, and performs feature extraction on any one iris region to obtain a corresponding iris feature; and performs identity recognition on a to-be-recognized object based on the extracted iris feature.

During actual application, when a processing capability of an iris acquisition device is sufficient, the iris recognition device 102 and the iris acquisition device 101 may be implemented by the same device. This is not limited in this disclosure.

In one or more embodiments of this disclosure, the iris acquisition device 101 and the iris recognition device 102 may be in direct or indirect communication connection through at least one network. The network may be a wired network, or may be a wireless network. For example, the wireless network may be a mobile cellular network, or may be a Wi-Fi network, or may be another possible network, which is not limited in this disclosure.

FIG. 1 merely shows an example for description. Actually, a quantity of iris acquisition devices and a quantity of iris recognition devices are not limited in this disclosure.

In one or more embodiments of this disclosure, when two servers are provided, the two servers may be grouped into a blockchain, and the servers are nodes on the blockchain. According to the iris recognition method disclosed in one or more embodiments of this disclosure, involved data related to iris recognition may be stored on the blockchain, for example, an iris image, a disparity map, a pupil edge, an iris region, an iris feature, or an identity recognition result.

Some other scenarios where iris recognition is applied are listed below:
(1) Security and access control system: The iris recognition may be applied to an access control system of a place such as an enterprise, a government agency, or a laboratory to verify that an authorized person can enter a specific region.
(2) Bank and financial institution: The iris recognition may be applied to financial scenarios such as a bank and an automatic teller machine (ATM) to provide a secure and convenient customer identity verification manner.
(3) Unlocking of an electronic device: The iris recognition may be applied to the unlocking of the electronic device such as a smart phone or a tablet computer to provide a more secure and convenient unlocking manner.
(4) Attendance system: The iris recognition may be applied to the attendance system of an enterprise or a school to ensure accuracy of attendance records of an employee or a student.
(5) Medical industry: The iris recognition may be applied to a medical institution to perform identity verification on a patient to ensure accuracy and security of medical information.
(6) Driving license test: The iris recognition may be applied to the driving license test to ensure identity authenticity of an examinee and prevent a phenomenon where one person takes an examination in place of the other.
(7) Voting system: The iris recognition may be applied to an election voting system to verify identity authenticity of a voter and support integrity of an election.
(8) Smart household: The iris recognition may be applied to a smart household system to implement identity recognition for a family member and provide a personalized household service.

The several iris recognition scenarios listed above are merely simple examples, and one or more embodiments of this disclosure are also applicable to other iris recognition scenarios. Such details are not repeated herein.

In a specific implementation of this application, relevant data such as an iris image is involved. When the foregoing embodiments of this application are applied to a specific product or technology, a permission or a consent from an object needs to be obtained, and collection, use, and processing of the relevant data need to comply with relevant laws, regulations, and standards of relevant countries and regions.

In combination with the application scenarios described above, the iris recognition method provided in the one or more embodiments of this disclosure is described below with reference to the accompanying drawings. The application scenarios are merely shown to facilitate understanding of the spirit and principle of this disclosure, and the implementations of this disclosure are not limited in this regard.

FIG. 3 shows a flowchart of an implementation of an iris recognition method according to an embodiment of this disclosure. The method includes blocks S31 to S35 shown in FIG. 3, which are described as follows.

S31: Obtain a plurality of iris images acquired for a to-be-recognized object. For example, a plurality of iris images corresponding to a first object is obtained, the plurality of iris images including at least two iris images acquired from different acquisition perspectives with respect to an eye region of the first object.

The plurality (or group) of iris images includes: at least two iris images acquired from different acquisition perspectives for the same eye region of the to-be-recognized object.

This operation is to acquire the iris image of the to-be-recognized object (an individual). In this disclosure, a dedicated iris acquisition device, such as an iris recognition camera, a contact iris acquisition instrument, or a non-contact iris acquisition instrument, may be utilized to capture a clear iris image.

The iris image acquired in this disclosure is processed through a stereo matching technology. In the stereo matching technology, a position of a corresponding point in an image is determined by comparing similarities in two or more stereo views, thereby implementing 3D reconstruction or object locating.

Therefore, for the same eye region of the to-be-recognized object, the iris images may be acquired from different acquisition perspectives to obtain at least two iris images. Each acquisition perspective corresponds to at least one iris image.

For example, a left camera and a right camera of a binocular camera may be configured to capture left and right view images of the same scenario, and the left and right cameras correspond to different acquisition perspectives. In this way, the iris images of the same eye region of the to-be-recognized object are acquired through the binocular camera, and the iris images including overlapped regions may be obtained from two different acquisition perspectives, so as to perform matching.

For another example, a monocular camera or another camera may also be configured to acquire the iris images of the same eye region of the to-be-recognized object from different acquisition perspectives.

Any one iris acquisition device for acquiring the group of iris images for the to-be-recognized object is applicable to one or more embodiments of this disclosure. Such details are not repeated herein.

To further improve image quality and then improve accuracy of subsequent pupil edge locating, some preprocessing operations for enhancing image quality may be performed on the acquired iris images.

In one or more embodiments of this disclosure, after operation S31 and before operation S32, the acquired iris images may also be preprocessed in at least one of the following manners.

Manner 1: Denoising processing is performed on an iris image.

Image denoising is intended to eliminate noise in an image to improve quality and a visual effect of the image. The noise may be caused through factors in an image acquisition process, such as a sensor error and uneven illumination.

In one or more embodiments of this disclosure, methods for performing denoising processing on an iris image are included, including, but not limited to, some or all of the following.
(1) Denoising through a filter

In an example, the filter may be a mean filter, a Gaussian filter, a median filter, a bilateral filter, or the like.

The mean filter smooths an iris image to reduce noise by replacing a value of a pixel with an average value for a neighborhood of the pixel. The Gaussian filter implements a smooth effect by performing weighted averaging on iris images through a Gaussian function as a weight. The median filter selects a neighborhood of a fixed size (such as 3×3 or 5×5) by using a current pixel as a center, sorts pixel values in the neighborhood, and uses a median value as a new value of the current pixel. This method may effectively retain image edge information and eliminate noise. The bilateral filter retains edge information and removes noise through spatial proximity and pixel value similarity.

In iris recognition, a denoising method that may be used is median filtering, which may effectively eliminate salt-and-pepper noise.
(2) Non-local means denoising: Averaging is performed on an entire iris image through self-similarity of the iris image to effectively retain textures and details.
(3) Wavelet transform: Wavelet decomposition of different levels is performed on an iris image through multiscale analysis, then threshold processing is performed on a detail coefficient, and finally, a denoised iris image is obtained through reconstruction.
(4) Anisotropic diffusion: Simulating a heat conduction process, an iris image is gradually smoothed through iterative calculation while an edge is retained.
(5) Total variation denoising: Noise is removed by minimizing a total variation of an iris image, and edge and texture information of the iris image are retained.
(6) Low-rank matrix recovery: Considering an iris image as a matrix, noise is removed by solving a low-rank matrix recovery problem.
(7) Deep learning method: A deep neural network, such as a convolutional neural network (CNN) and a generative adversarial network (GAN), is configured to learn prior knowledge of an iris image, so as to implement high-efficient denoising.

The image denoising manners listed above are merely simple examples. Other manners are also applicable to one or more embodiments of this disclosure. Such details are not repeated herein. In addition, a suitable denoising method is selected based on a noise type, image content, and an application scenario. In an actual application, a plurality of methods or adjustment parameters may be combined to obtain an optimal denoising effect. This is not limited herein.

Manner 2: Histogram equalization processing is performed on an iris image.

Histogram equalization is an image enhancement method, which may improve contrast of an image, so that an iris texture is clearer. It has a basic idea in which a gray level having a high frequency of occurrence in an image is broadened and a gray level having a low frequency of occurrence is narrowed. In this way, a grayscale histogram of an image tends to be uniform, thereby improving an overall contrast and a visual effect of the image.

The following briefly describes operations for performing histogram equalization processing on an iris image.
(1) An original iris image is converted into a grayscale image, a gray level thereof is determined, and a grayscale histogram is obtained through statistics. The grayscale histogram characters a distribution of quantities of pixels of various gray levels in the iris image.

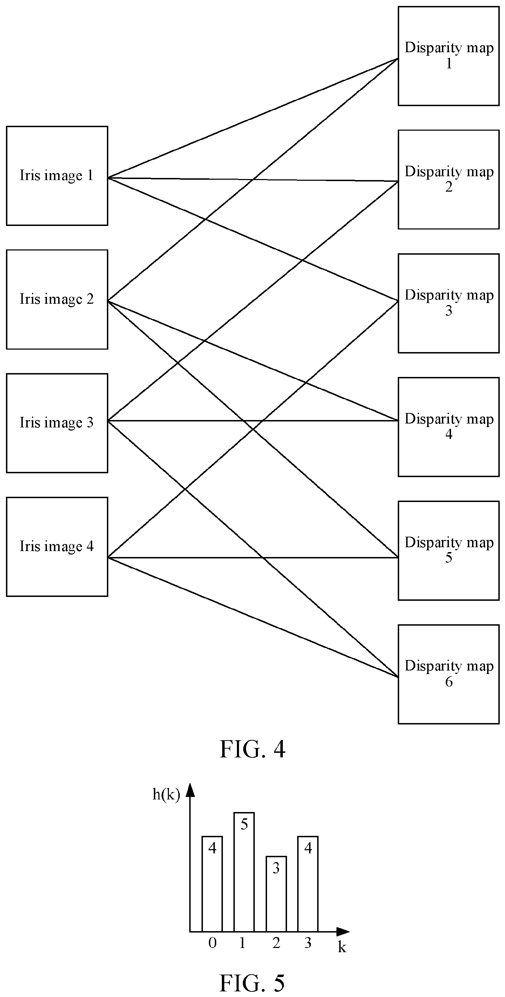

FIG. 5 shows a schematic diagram of a grayscale histogram according to an embodiment of this disclosure. A horizontal axis k in FIG. 5 represents a gray level, and a vertical axis h (k) represents a pixel quantity. FIG. 5 simply illustrates 4 gray levels and a distribution of a quantity of pixels in each of the gray levels. As shown in FIG. 5, 4 pixels have a gray level of 0, 5 pixels have a gray level of 1, 3 pixels have a gray level of 2, and 4 pixels have a gray level of 3.

In some examples, more gray levels (e.g., 256) are in an image, and more pixels are in the image. FIG. 5 is merely a simple example. Such details are not repeated herein.

(2) A cumulative distribution function (CDF) of each gray level is calculated.

The CDF is referred to as a distribution function for short, is an integral of a probability density function, and can describe a probability distribution of a real random variable.

For example, an original iris image contains L (e.g., 256) gray levels in total exist, and a quantity of pixels of each of the gray levels is *nᵢ*, where 0<i<L. Therefore, a probability of occurrence of pixels having a gray level of i in the image is: pₓ(i) = p(x = i) = nᵢ/n. Here, n is a quantity of all pixels in the image.

A cumulative distribution function of px is a cumulative normalized histogram of the image: ${cdf}_{x} \left(i\right) = {\sum }_{j = 0}^{i} {p}_{x} \left(j\right)$.

(3) A grayscale value of the original iris image is mapped to a new grayscale value through the cumulative distribution function, so that a grayscale distribution of the new image is more uniform.

A specific mapping formula is as follows: $h \left(v\right) = round \left(\frac{cdf \left(v\right) - {cdf}_{min}}{\left(M*N\right) - cdf}*\left(L-1\right)\right) ;$

Here, cdfmin is a minimum value of the cumulative distribution function, M and N represent quantities of pixels in length and width directions, respectively, and v is an original grayscale value, and h (v) is a new grayscale value after mapping.

In one or more embodiments of this disclosure, the histogram equalization can simply enable effective improvement of contrast of an image, especially an image having a relatively small dynamic range. After processed through the histogram equalization, contrast of an iris image is improved, so that details such as an iris texture in the iris image are clearer, and a boundary between a pupil and an iris is clearer, facilitating subsequent operations, such as pupil edge locating and iris feature extraction.

### Manner 3: Grayscale stretch

A pixel value of an iris image is linearly stretched to extend a contrast range, so that details of the iris image are clearer.

In addition to the foregoing listed manners for enhancing image quality, other manners may be used for image enhancement to improve image quality. For example, sharpening, color correction, or the like may also be configured to improve the image quality.

Each method has an application scenario and advantages thereof, and a suitable method is selected based on a specific application requirement and an image feature. In one or more embodiments of this disclosure, an objective of image enhancement is to improve a visual effect of an image, so that the image is more suitable for further analysis and processing, such as subsequent pupil edge locating and iris feature extraction. In an actual application, a plurality of methods may be combined to implement an optimal enhancement effect, which is not limited herein.

In the foregoing implementations, image quality is improved through a preprocessing operation, so that related detailed features such as an iris and a pupil in an image may be clearer, thereby effectively improving accuracy of subsequent pupil edge locating.

S32: Perform stereo matching between the at least two iris images to obtain a disparity map between the at least two iris images. For example, a disparity map between the at least two iris images is obtained through a stereo matching process, the disparity map including a disparity element representing a displacement amount in a displacement direction between two respective pixel points corresponding to a target element in the eye region in the at least two iris images.

In some embodiments, in S32, the iris images may be rectified to eliminate a disparity between the iris images. Pupil feature points are extracted from each of the rectified iris images. Pixel points corresponding to the same eye region element (e.g., a target element in the eye region) are determined from the extracted pupil feature points through stereo matching. A disparity map between the at least two iris images is obtained based on positions of the determined pixel points in the iris image where the pixel points are located.

In some embodiments, in S32, stereo matching may be separately performed between every two iris images to obtain a disparity map between every two iris images.

Each disparity map includes a disparity element. Each disparity element represents a displacement amount in a specified direction between two pixel points corresponding to the same eye region element (e.g., a target element in the eye region) in the at least two iris images. The eye region element may correspond to an element in the foregoing eye region of the to-be-recognized object, for example, a point in the appearance of the eye region. For ease of description, two pixel points corresponding to the same eye region element are referred to as corresponding points for short below.

The specified direction is related to a placement position of an iris acquisition device.

In an example in which a binocular camera is used, a disparity map may correspond to a deviation in pixel positions of the same scenario when imaged by two cameras. The binocular camera is horizontally placed, and therefore, the position deviation is reflected in a horizontal direction. If the camera is not horizontally placed, the specified direction may also be another direction. The direction depends on a specific situation. Such details are not repeated herein.

In one or more embodiments of this disclosure, when quantities of iris images in the group of iris images are different, quantities of obtained disparity maps are also different.

For example, if the group of iris images includes two iris images, stereo matching is performed on the two iris images to obtain one disparity map. The disparity map reflects displacement amounts of corresponding points in the two iris images in a specified direction (such as a horizontal direction).

For another example, if the group of iris images includes three or more iris images, these iris images all correspond to the same eye region of a to-be-recognized object. Therefore, an overlapped region exists between any two iris images (if an iris image has no overlapped region with another iris image, or an overlapped region irrelevant to an eye, the iris image may be ignored). Therefore, stereo matching may be performed between every two iris images in the group of iris images to obtain at least two disparity maps. Every two iris images correspond to one disparity map.

FIG. 4 shows a schematic diagram of logic of stereo matching of four iris images according to an embodiment of this disclosure.

Assuming that a group of iris images includes four iris images, they are denoted as an iris image 1, an iris image 2, an iris image 3, and an iris image 4. Stereo matching is performed between the iris image 1 and the iris image 2, so that a disparity map 1 can be obtained. Stereo matching is performed between the iris image 1 and the iris image 3, so that a disparity map 2 can be obtained. Stereo matching is performed between the iris image 1 and the iris image 4, so that a disparity map 3 can be obtained. Stereo matching is performed between the iris image 2 and the iris image 3, so that a disparity map 4 can be obtained. Stereo matching is performed between the iris image 2 and the iris image 4, so that a disparity map 5 can be obtained. Stereo matching is performed between the iris image 3 and the iris image 4, so that a disparity map 6 can be obtained.

In one or more embodiments of this disclosure, a size of the disparity map is the same as that of the iris image. In other words, pixel points of the disparity map are in one-to-one correspondence with pixel points of the iris image.

A process of performing stereo matching between every two iris images to obtain a disparity map is described below.

Stereo matching is a computer vision technology, which is configured to find positions of corresponding points in two stereo images, thereby implementing 3D reconstruction or object locating. In iris recognition, stereo matching may be configured to locate a pupil edge.

In one or more embodiments of this disclosure, a stereo matching process in S32 may be implemented according to the following operations, including the following processes S321 to S324 (not shown in FIG. 3).

S321: Rectify two iris images to eliminate, remove, or reduce, a disparity between the two iris images.

In the stereo matching technology, two iris images may be used. Using an example in which a capture is performed two cameras of a binocular camera, an image captured by a left camera is denoted as a left view, and an image captured by a right camera is denoted as a right view.

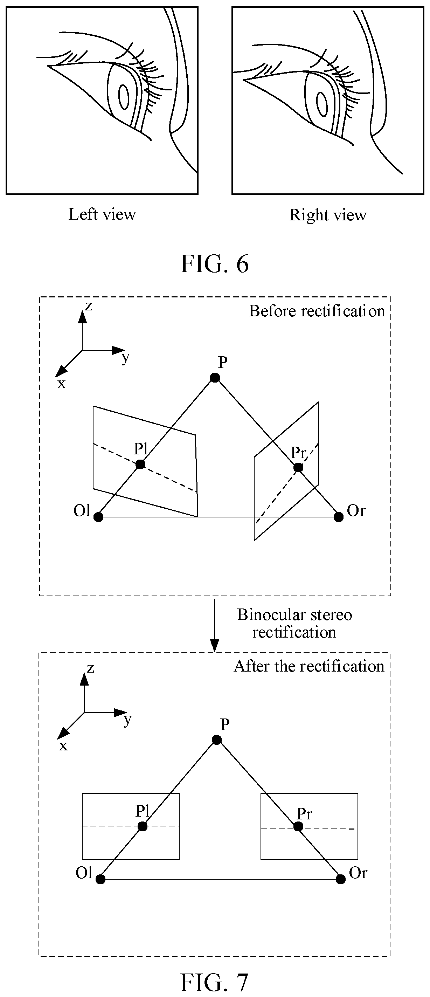

FIG. 6 shows a schematic diagram of two iris images according to an embodiment of this disclosure. The left view in FIG. 6 is an image of an eye of a to-be-recognized object captured by a left camera of a binocular camera, and the right view is an image of the eye captured by a right camera of the binocular camera. The two images may both be referred to as iris images, and the two images have an overlapped region for matching.

Before performing stereo matching, the images may also be rectified to eliminate a disparity between the left view and the right view. The disparity is caused by a position difference between the left eye and the right eye, thereby affecting accuracy of stereo matching. A plurality of rectification methods are included, such as binocular stereo rectification, perspective transformation, and affine transformation. Therefore, when a disparity map is formed later, a point at each position may represent horizontal displacements of pixels of the left view and the right view.

The binocular stereo rectification is an image preprocessing method, which is configured to eliminate a disparity of a binocular image pair, so that the left view and the right view are on the same horizontal line. In this way, a stereo matching process may be simplified, and matching accuracy may be improved. The binocular stereo rectification may be implemented by calculating internal and external parameters of a camera and performing geometric transformation on an image.

In the stereo rectification, two images after distortion elimination are in strict row correspondence, and epipolar lines of the two images are exactly on the same horizontal line through epipolar line constraint. In this way, any point in one image necessarily has the same number of a row as a corresponding point thereof in the other image, so that the corresponding point is matched only through a one-dimensional search performed in the row.

The binocular rectification may correspond to distortion elimination and row alignment performed on left and right views based on monocular intrinsic parameter data (a focal length, an imaging origin, and a distortion coefficient) and a binocular relative position relationship (a rotation matrix and a translation vector) that are obtained after camera calibration, so that coordinates of imaging origins of the left and right views are consistent, optical axes of two cameras are parallel, left and right imaging planes are coplanar, and epipolar lines are in row alignment.

FIG. 7 shows a schematic diagram of a rectification principle according to an embodiment of this disclosure.

Assuming a point P in space, the coordinate of point P in a world coordinate system is Pw, the coordinate of point P in a left camera coordinate system in a binocular camera may be represented as Pl, and the coordinate of point P in a right camera coordinate system in the binocular camera may be represented as Pr.

As shown in FIG. 7, after rectification, two images are coplanar in a plane, and epipolar lines are in row alignment, so that any point in an image necessarily has the same row number as a corresponding point thereof in the other image. In this way, then, the corresponding point is matched only through a one-dimensional search performed in the row, thereby improving efficiency of subsequent matching of corresponding points.

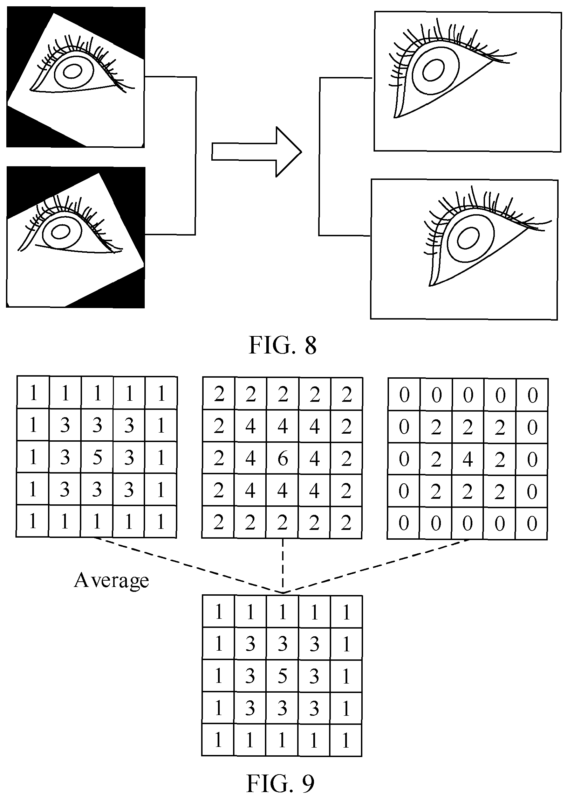

During iris recognition, the stereo rectification is performed on two iris images through the foregoing binocular stereo rectification method. FIG. 8 shows a schematic diagram of an iris image before and after rectification according to an embodiment of this disclosure. Two iris images on the left of FIG. 8 represent left and right views of the same eye region of a to-be-recognized object captured through a binocular camera before rectification. Two iris images subjected to binocular stereo rectification are shown on the right of FIG. 8.

In the implementation, through image rectification, dimensions in which a search is made to match corresponding points in the two iris images are reduced from two dimensions to one dimension, greatly improving efficiency.

S322: Separately extract pupil feature points from each rectified iris image.

In one or more embodiments of this disclosure, in the rectified image, the pupil feature points may be extracted for matching. In an example, the extracted pupil feature points include, but are not limited to, some or all of the following:

### (1) Corner point

The corner point is one of local features in an iris image and may correspond to a point having a significant angle change. The corner point has good stability and distinguishability.

In one or more embodiments of this disclosure, algorithms for extracting the corner point include Harris corner point detection, Shi-Tomasi corner point detection, and the like, which are not limited herein.

### (2) Edge point

The edge point is also one of the local features in an image, which may correspond to a point in an iris image whose grayscale value significantly changes and may be configured to describe a contour and shape information of an object.

In one or more embodiments of this disclosure, algorithms for extracting the edge point include Canny edge detection, Sobel edge detection, Roberts edge detection, Prewitt edge detection, Laplacian edge detection, Laplacian of Gaussian (LoG) edge detection, and the like, which are not limited herein.

S323: Determine corresponding points from the extracted pupil feature points through stereo matching. For example, a pixel point in each of the at least two rectified iris images corresponding to the target element is determined from the extracted pupil feature points through the stereo matching process.

After the feature points are extracted, corresponding points in two iris images (for example, the left view and the right view listed above) may be found through a stereo matching algorithm.

The stereo matching algorithm includes, but is not limited to, some or all of the following:
an area-based matching algorithm, a feature-based matching algorithm, and the like.

In one or more embodiments of this disclosure, the stereo matching is configured to perform pupil locating in iris recognition. Using an example in which the area-based matching algorithm is employed, positions of corresponding points are determined by comparing similarities of pixel values in two iris images (for example, the left view and the right view listed above).

In embodiments, methods for measuring a similarity of a pixel value include, but are not limited to, some or all of the following.

### (1) Sum of squared differences (SSD) algorithm

The SSD is a similarity measurement method, which is configured to calculate a difference between two image regions. A smaller SSD value represents that the two regions are more similar.

In one or more embodiments of this disclosure, SSD values of pupil feature points extracted from two iris images may be compared through the SSD algorithm, and corresponding points are determined based on the values. For example, an SSD value between two pupil feature points is less than a preset SSD threshold, and the two pupil feature points may be considered to be a group of corresponding points in the two iris images.

### (2) Normalized cross correlation (NCC) algorithm.

The NCC is another similarity measurement method, which is configured to calculate a correlation between two image regions. A larger NCC value represents that the two regions are more similar.

In one or more embodiments of this disclosure, NCC values of pupil feature points extracted from two iris images may be compared through the NCC algorithm, and corresponding points are determined based on the values. For example, an NCC value between two pupil feature points is greater than a preset NCC threshold, and the two pupil feature points may be considered to be a group of corresponding points in the two iris images.

The foregoing listed manners for performing stereo matching on two iris images are merely simple examples. In addition, other stereo matching manners are also applicable to one or more embodiments of this disclosure. Such details are not repeated herein.

S324: Obtain a disparity map corresponding to the two iris images based on positions of the determined corresponding points in corresponding iris images. For example, the disparity map between the at least two iris images is obtained based on a position of the determined pixel point in each of the at least two iris images.

When a human eye (or a camera) observes the same object from two slightly different viewpoints, it sees two slightly different images. Such a difference between images is a disparity herein. Using human eyes as an example, when we stare at a distant object, positions of a close object in images seen by two eyes have a relatively large difference. In this case, the disparity is relatively large. On the contrary, positions of the distant object in the images seen by the two eyes have a relatively small difference, and therefore the disparity is relatively small. Based on this principle, our brains can understand a 3D structure of the world we see by parsing the differences (disparities).

In the context herein, the disparity may correspond to such a spatial difference between images, to be specific, a relative position of a point on an image on another image. This may be described as a value (for example, a pixel difference of a position) or a brightness level (in a disparity map). This difference or "disparity" may be configured to calculate a depth or distance of an object.

In one or more embodiments of this disclosure, in a process of performing stereo matching on two iris images, a disparity map is generated. Each pixel value in the disparity map may represent a horizontal displacement amount of corresponding points in a left view and a right view, and a larger value represents that an object is closer to an observer (such as, a binocular camera).

Assuming a simplified disparity map, the disparity map may be represented as the following two-dimensional matrix: $\begin{matrix}[ \\ \left[1, 1, 1, 1, 1\right] , \\ \left[1, 3, 3, 3, 1\right] , \\ \left[1, 3, 5, 3, 1\right] , \\ \left[1, 3, 3, 3, 1\right] , \\ \left[1, 1, 1, 1, 1\right] \\ ]\end{matrix}$

In the disparity map, a larger value represents that an object is closer to an observer.

This simplified disparity map represents a structure similar to a pupil. In this simplified example, a value in the middle is 5, values in the periphery gradually decrease. A value at the center of the matrix changes most, which represents that a pupil edge is possibly located in this region.

In one or more embodiments of this disclosure, the pupil edge may be located more accurately through the stereo matching technology under complex conditions of illumination and pupil size changes. Based on the accurately found pupil edge, a more accurate iris range may be determined, thereby improving iris recognition accuracy, and enabling a good recognition effect even in complex conditions, such as a pupil size change, a light change, and a blurred pupil edge.

In embodiments, after the disparity map is obtained through the stereo matching algorithm, a position of a pupil may be determined by calculating depth information of the pupil, so as to accurately position the pupil edge, for example, as described below.

S33: Determine, in a target iris image of the at least two iris images, a pupil edge based on the displacement amount in the disparity map. For example, in a target iris image that is one of the at least two iris images, a pupil edge is determined based on the displacement amount.

To be specific, in S33, the pupil edge is located from any one iris image included in the group of iris images based on the obtained disparity maps.

As described in the foregoing embodiments, the group of iris images in one or more embodiments of this disclosure may include two iris images, or three or more iris images. When the group of iris images includes two iris images, one disparity map may be obtained. When the group of iris images includes three or more iris images, at least two disparity maps may be obtained.

Therefore, when operation S33 is performed, different locating manners may be set based on a quantity of the disparity maps.

For example, if one disparity map is obtained, the pupil edge may be located from any one iris image included in the group of iris images based on the disparity map.

For another example, if at least two disparity maps are obtained, one of the following two locating manners may be used.

### Locating manner 1: Disparity map fusion locating

To be specific, image fusion is performed on the at least two disparity maps. Then, the pupil edge is located from any one iris image included in the group of iris images based on a fused disparity map. For example, in an iris image, a position where a change in the displacement amount in the fused disparity map meets a preset condition is determined as the pupil edge. In some examples, when at least two disparity maps are obtained, image fusion is performed on the at least two disparity maps to obtain a fused disparity map, each of the at least two disparity maps being obtained from two corresponding iris images in the plurality of iris images. In some examples, the determining the pupil edge includes determining the pupil edge in the target iris image based on a position where a change in the displacement amount in the fused disparity map meets a preset condition.

In some embodiments, when performing the image fusion on the at least two disparity maps, an implementation may be:
an operation is performed on a pixel level, and weighted averaging or a combination in another form is performed on pixel values (i.e., disparity element values) of corresponding points on different disparity maps to obtain a final disparity map.

FIG. 9 shows a schematic diagram of disparity map fusion according to an embodiment of this disclosure. Assuming three simplified disparity maps, each disparity map is represented as a two-dimensional matrix, the three disparity maps shown in FIG. 9 may be respectively represented as: $\begin{matrix}[ \\ \left[1, 1, 1, 1, 1\right] , \\ \left[1, 3, 3, 3, 1\right] , \\ \left[1, 3, 5, 3, 1\right] , \\ \left[1, 3, 3, 3, 1\right] , \\ \left[1, 1, 1, 1, 1\right] \\ ] ;\end{matrix}$ $\begin{matrix}[ \\ \left[2, 2, 2, 2, 2\right] , \\ \left[2, 4, 4, 4, 2\right] , \\ \left[2, 4, 6, 4, 2\right] , \\ \left[2, 4, 4, 4, 2\right] , \\ \left[2, 2, 2, 2, 2\right] \\ ] ;\end{matrix}$ $\begin{matrix}[ \\ \left[0, 0, 0, 0, 0\right] , \\ \left[0, 2, 2, 2, 0\right] , \\ \left[0, 2, 4, 2, 0\right] , \\ \left[0, 2, 2, 2, 0\right] , \\ \left[0, 0, 0, 0, 0\right] \\ ]\end{matrix}$

In each disparity map, a larger value represents that an object is closer to an observer.

When performing disparity map fusion, values of corresponding points in the three disparity maps may be averaged, and a final fused disparity map may be represented as the following two-dimensional matrix: $\begin{matrix}[ \\ \left[1, 1, 1, 1, 1\right] , \\ \left[1, 3, 3, 3, 1\right] , \\ \left[1, 3, 5, 3, 1\right] , \\ \left[1, 3, 3, 3, 1\right] , \\ \left[1, 1, 1, 1, 1\right] \\ ] .\end{matrix}$

The foregoing listed manner of disparity map fusion is merely a simple example. In addition, other image fusion manners are also applicable to one or more embodiments of this disclosure. Such details are not repeated herein.

### Locating manner 2: Pupil edge fusion locating

To be specific, based on each disparity map, a pupil edge is located in an iris image corresponding to the disparity map; and then, at least two pupil edges determined based on at least two disparity maps are fused to obtain a fused pupil edge. In some examples, when at least two disparity maps are obtained from two corresponding iris images in the plurality of iris images, a position in an iris image corresponding to each of the at least two disparity maps where a change in a displacement amount in the respective disparity map meets a preset condition is determined as an initial pupil edge corresponding to the respective disparity map. In some examples, at least two determined initial pupil edges are fused to obtain a fused pupil edge, the pupil edge in the target iris image being determined based on the fused pupil edge.

In some embodiments, when pupil edge fusion is performed, at least two pupil edges may be first aligned on a spatial position to find a correspondence therebetween through a feature point matching technology, such as corner point detection and descriptor matching. Then, these edges may be merged through an image fusion algorithm. In some embodiments, the image fusion method includes, but is not limited to, some or all of the following: Alpha fusion, pyramid fusion, and Poisson fusion. The Alpha fusion is a process of superimposing a foreground on a background through transparency. The pyramid fusion and the Poisson fusion provide different image fusion technologies to fuse images while maintaining image details.

In some embodiments, postprocessing, such as a morphological operation, may also be performed on the fused pupil edge, so as to remove possible gaps and discontinuities, thereby ensuring continuity and integrity of the edge.

In the foregoing implementations, no matter whether the pupil edge is determined through fusion of at least two disparity maps or fusion of at least two pupil locating results, accuracy of pupil locating can be improved to some extent.

Based on the above, the foregoing listed several manners of locating a pupil edge under a plurality of views are merely simple examples. Other manners are also applicable to one or more embodiments of this disclosure. Such details are not repeated herein.

In one or more embodiments of this disclosure, no matter which one of the foregoing manners is used, the pupil edge may be determined based on a disparity map. In embodiments, when the pupil edge is located based on the disparity map, to find the position of the pupil edge, gradient information in the disparity map may be calculated. The gradient represents a change rate of an element value in an image and may be configured to detect an edge. In some examples, an element value at an edge position has a large change. Based on this, the position of the pupil edge may be obtained through subsequent threshold processing. In one or more embodiments of this disclosure,

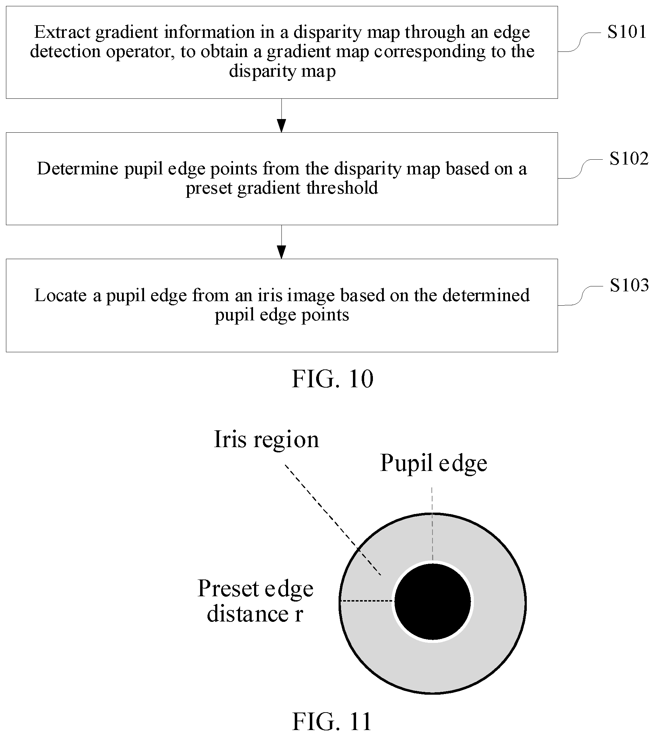

FIG. 10 shows a flowchart of a method for locating a pupil edge according to an embodiment of this disclosure. Locating a pupil edge from an iris image in the manner shown in FIG. 10 includes blocks S101 to S103 shown in FIG. 10.

S101: Extract gradient information in a disparity map through an edge detection operator to obtain a gradient map corresponding to the disparity map.

A gradient element of a position in a gradient map represents a change rate of a grayscale value of a pixel point corresponding to the position in a disparity map.

S102: Determine pupil edge points from the disparity map based on the gradient map and a preset gradient threshold.

S103: Locate a pupil edge from an iris image based on the determined pupil edge points.

In one or more embodiments of this disclosure, in a disparity map matrix, a larger value (for example, the foregoing number 5) represents that a pupil is closer. The pupil is sunken in an eyeball, and therefore, in a relatively three-dimensional image, a pupil region is farther from an actual camera position in depth of field than an iris (having a smaller disparity).

Next, a position of the pupil edge may be found based on the disparity map. To find the edge, a method used herein is to calculate a gradient of a disparity element value of the disparity map. The gradient is a vector and represents a direction and a maximum value of a function (herein, the function is a grayscale value of an image) having a maximum direction derivative at a point. In an image, a size of the gradient is frequently used as a representation of an edge strength.

Still using the foregoing listed disparity map matrix as an example, the value of the center of the matrix changes most, which means a significant change from 5, then 3, to 1, and surrounding values are relatively stable (all 1). Therefore, the gradient has a relatively large value in this region. Therefore, the gradient map may be obtained by calculating a difference (i.e., a gradient) between each pixel point and a neighboring point thereof.

In one or more embodiments of this disclosure, a process of calculating the gradient map may be implemented through an edge detection operator, and a principle of extracting gradient information through the edge detection operator may be based on discontinuity of local features of an image. In an image, an edge may be represented as a place where a grayscale, a color, or a texture structure changes abruptly, for example, a place in an iris image where a grayscale changes abruptly. In embodiments, any one or more of the following edge detection operators may be used for detecting the edges.

In embodiments, the edge detection operator includes, but is not limited to, some or all of the following:
a Canny operator, a Sobel operator, a Roberts operator, a Prewitt operator, a Laplacian operator, and a LoG operator.

Overall, these operators have advantages and disadvantages and are also applicable to different conditions. For example, the Roberts operator is simple and fast, but sensitive to noise. The Sobel operator and the Prewitt operator have some resistance to noise, but may cause the loss of some edge information. The Laplacian operator is accurate for edge locating, but is very sensitive to noise. The Canny operator provides a more comprehensive edge detection method, but is more complex in calculation. In an actual application, a suitable edge detection operator is determined based on specific image content and a processing requirement, which is not limited herein.

For example, gradient information in a disparity map is extracted through the Canny operator, so that a gradient map corresponding to the disparity map can be obtained.

Similar to the foregoing listed disparity map, the gradient map may also be represented as a two-dimensional matrix. A size of the two-dimensional matrix is the same as that of an original image. To be specific, the gradient map may also be represented as a 5*5 two-dimensional matrix.

In one or more embodiments of this disclosure, after the gradient map is obtained, a threshold is applied to determine which gradient values may be considered as edges. The threshold may be fixed or may be dynamically calculated. By setting the threshold, edges that are prominent and edges that may be caused through noise may be determined, so as to obtain a final edge detection result.

Because a lower threshold indicates more side edges that can be detected, a result is more likely to be affected by noise in an image, and an unrelated feature is more likely to be picked out from the image. On the contrary, a high threshold causes missing of a thin or short line segment. Therefore, selecting a suitable threshold may improve the performance of screening suitable side edges.

In some embodiments, a dynamic determining manner is as follows.

In one or more embodiments of this disclosure, a threshold selection method with a hysteresis effect may be used, and
different thresholds are used for searching for a pupil edge point. First, an upper threshold is used for searching for a place at which an edge starts. Once a start point is found, a path for detecting pupil edge points is followed on an image point by point. Positions of pupil edge points are recorded when a value is greater than a lower threshold, and recording is not stopped until the value is less than the lower threshold.

In this method, pupil edge points are assumed to form a continuous boundary line and can follow, and enable detection of, a blurred part of pupil edge points seen before, and noise points in an image are not denoted as pupil edge points.

In some other embodiments, considering that a single global threshold may not be enough to process an entire image, use of an adaptive threshold method may be considered to adjust a threshold based on local features of the image.

In some other embodiments, a fixed threshold may be set based on experience or through an experiment, then this gradient array is filtered based on a threshold, and a point whose gradient value is greater than the threshold is selected as a pupil edge point. For example, an optimal threshold is determined through an experiment. A relatively low threshold may be applied first, and then is gradually increased to observe an effect of edge detection. An ideal threshold can enable extraction of a real edge to the greatest extent with noise being suppressed.

The foregoing listed two manners of selecting a threshold to find a pupil edge point are merely simple examples. In addition, other manners are also applicable to one or more embodiments of this disclosure. Such details are not repeated herein.

In operation S103, after the pupil edge points are determined, coordinates of extreme points of edge points in left and right fixed regions may be calculated through a least squares parabolic fitting method (or another fitting method), to obtain an initial center coordinate and a radius of a pupil and thus determine the pupil edge.

In the foregoing implementations, this disclosure recognizes that a texture and a structural feature of a pupil region are different from a feature of an iris region. If the pupil region is not excluded, feature extraction may be hindered. In this disclosure, the pupil region may be excluded from an iris image by locating the pupil edge, thereby reducing interference in a feature extraction process.

S34: Determine an iris region in the target iris image based on the pupil edge, and perform feature extraction on the iris region to obtain an iris feature. For example, an iris region in the target iris image is determined based on the pupil edge, and feature extraction is performed on the iris region to obtain an iris feature.

In combination with the schematic diagram of the eye shown in FIG. 2, the iris is an annular region located outside the pupil. Therefore, after the pupil edge is determined, an annular region within a specific range of the pupil edge may be the iris region. In some embodiments, the implementations may be as follows.

In the iris image, an annular region having a preset width outside the pupil edge is determined as the iris region. To be specific, a preset edge distance is set around a pupil edge in any one iris image. An annular region determined based on the pupil edge and the preset edge distance is used as an iris region in any one iris image.

In some embodiments, the preset edge distance in one or more embodiments of this disclosure represents a difference between an outer diameter and an inner diameter of an annulus of an iris region, i.e., a width of the annulus. In some examples, the preset edge distance may be determined based on a type of a to-be-recognized object. Different types of to-be-recognized objects correspond to different preset edge distances. For example, an iris region of an adult is approximately 2-4 mm. However, this range may vary from person to person. For example, the preset edge distance may be set to 3 mm. In some examples, an iris region of a baby is relatively narrow, approximately 1-2 mm. For example, the preset edge distance may be set to 1.5 mm.

In some embodiments, a width of an iris region of a cat or a dog varies based on a breed, an age, and an individual difference. In some examples, the width of the iris region of the cat is approximately 1-2 mm. For example, the preset edge distance may be set to 1.5 mm. However, the width of the iris region of the dog is approximately 2-4 mm. For example, the preset edge distance may be set to 3 mm.

The foregoing listed values of the preset edge distance are merely simple examples, and actually, values may be flexibly set based on an individual difference or the like. This is not limited herein.

FIG. 11 shows a schematic diagram of a manner for determining an iris region according to an embodiment of this disclosure. A black circular region is a pupil, and a white circle at the black circular region represents a pupil edge. When the pupil edge and a preset edge distance r are determined, an annular region outside the pupil edge whose width is the preset edge distance r may be determined as the iris region, for example, a gray region in FIG. 11.

In the foregoing implementations, information about the position and size of the pupil edge may help determine a range of the iris. In some embodiments, by setting a specific edge distance around a pupil edge, an iris region irrelevant to a pupil may be obtained. This region includes texture information of an iris, thereby helping improve accuracy of feature extraction.

After the iris region is determined based on the foregoing manner, a texture feature of the iris may be extracted, with an objective to extract, from the iris image, distinguishing features that can reflect texture and structure information thereof. These features have high distinguishability and stability to facilitate subsequent recognition and matching processes.

In one or more embodiments of this disclosure, performing feature extraction on the iris region to obtain a corresponding iris feature includes at least one of the following manners.

Feature extraction manner 1: Feature extraction is performed on the iris region through filters of different scales and directions to obtain corresponding response values, and the response values extracted by the filters are combined to form an iris feature corresponding to the iris region.

For example, the texture feature of the iris region is extracted through a Gabor filter. The Gabor filter is a method used for texture analysis and feature extraction. The Gabor filter may capture local texture information of an image in different scales and directions.

A direction of the Gabor filter is determined by an angle parameter θ defined by a filter kernel. The angle parameter describes a direction of parallel stripes in the kernel. In an actual application, the direction parameter may be any real value from 0° to 360°, which allows the Gabor filter to respond to features in different directions in an image. Such direction selectivity makes the Gabor filter especially suitable for processing texture information and widely applied in visual science because the Gabor filter can simulate sensitivity of a human visual system to a directional feature.

A scale of the Gabor filter is a parameter related to a frequency bandwidth and direction selectivity of the Gabor filter. The scale parameter may be related to a standard deviation σ of a Gaussian envelope function and determines a width of the filter in a frequency domain. A larger value of σ means a wider response range of the filter in the frequency domain, thereby capturing more frequency components. A smaller value of σ corresponds to a narrower frequency domain response, capturing frequency components in a specific range. By adjusting these parameters, the Gabor filter may be designed to respond to image features of a specific scale, which makes the Gabor filter useful in multiscale analysis.

During iris recognition in this disclosure, the Gabor filter may effectively extract an iris texture feature. In an example, a series of Gabor filters of different scales and directions are applied to the iris image. The Gabor filter responds to capture rich details of the iris texture based on a spectrum and a spatial local feature. Extracted response values may be configured to represent texture information in the iris image. Therefore, these response values are combined and may be used as a feature vector of the iris.

Selection of parameters of the Gabor filter, such as a scale and a direction, needs to adapt to characteristics of the iris texture, and a suitable filter parameter may be selected through an adaptive method.

In the foregoing implementations, the Gabor filter can simulate a response of a human visual system and may effectively extract iris features. In addition, the parameter of the filter is adjusted, so that the filter can better adapt to the texture feature of the iris, thereby improving accuracy and robustness of recognition.

In addition to the foregoing listed manners of extracting the iris feature through the Gabor filter, another filter, such as a Gaussian filter, a Butterworth filter, or a Laplacian filter, may also be configured for extracting an iris feature. Details are not described herein again.

In addition, when a filter is selected, a characteristic of an iris texture and a requirement for subsequent feature matching and classification need to be considered. A plurality of filters and analysis methods may also be combined to extract a more distinguishing iris texture feature, for example, in combination with the Gabor filter and the Gaussian filter.

Feature extraction manner 2: grayscale values of each pixel point and a corresponding neighborhood pixel point in an iris region are compared to extract an iris feature corresponding to the iris region.

The manner is a local binary pattern (LBP). The LBP is a method for texture description, which may describe a local texture feature in an image. In an example, in an LBP algorithm, grayscale values of a pixel point and a neighborhood pixel point thereof are compared to generate a binary sequence as an LBP value of the pixel point. The neighborhood pixel point may include a plurality of adjacent pixel points adjacent to the pixel point.

In the iris recognition in this disclosure, the LBP may be configured to extract a local texture feature of an iris. The LBP may be applied to an entire iris image to obtain a feature vector describing an iris texture.

In the foregoing implementations, both the Gabor filter and the LBP algorithm can effectively enable capturing of an iris texture feature, thereby providing strong support for subsequent recognition and matching processes.

The foregoing listed feature extraction manners are merely simple examples. In an actual application, another manner may be used for extracting an iris feature. For example, based on a LoG operator, scale-invariant feature transform (SIFT), speeded-up robust feature (SURF) extraction, Fourier transform, a multiscale analysis method, or the like, feature information of an iris texture may be effectively extracted to improve accuracy and robustness of iris recognition. Details are not described herein again.

Through the Fourier transformation, an image may be converted from a space domain to a frequency domain and thus may be processed through a frequency domain filter. A spectrum characteristic of an iris texture is analyzed, so that a corresponding frequency domain filter can be designed to extract a specific texture feature. Multiscale analysis method: The multiscale analysis method such as wavelet transform and multiresolution analysis may also be configured for extracting the iris texture feature. These methods can enable analyzing an image on different scales, thereby capturing a multiscale feature of an iris texture.

Any one of the foregoing listed feature extraction manners may be used alone or may be used in combination with another feature extraction manner. This is not limited herein.

A texture and a structural feature of a pupil region are different from a feature of an iris region. In one or more embodiments of this disclosure, the pupil region may be excluded from an iris image by locating the pupil edge to eliminate interference to feature extraction caused by the pupil region, thereby reducing interference in an iris feature extraction process.

In one or more embodiments of this disclosure, considering that in the iris region near the pupil edge, texture information may be affected by factors such as illumination and being blocked, the pupil edge is located, so that a corresponding processing strategy may be adopted for these affected regions, for example, adjusting a filter parameter and enhancing contrast to optimize a feature extraction effect.

In some embodiments, before feature extraction is performed on the iris region to obtain a corresponding iris feature, contrast of the iris region is enhanced.

For example, the iris region may be processed through histogram equalization again, or local contrast enhancement, adaptive contrast enhancement, gamma rectification, filtering using a filter, or the like to enhance the contrast of the iris region.

Any manner for enhancing image contrast is applicable to one or more embodiments of this disclosure. Such details are not repeated herein.

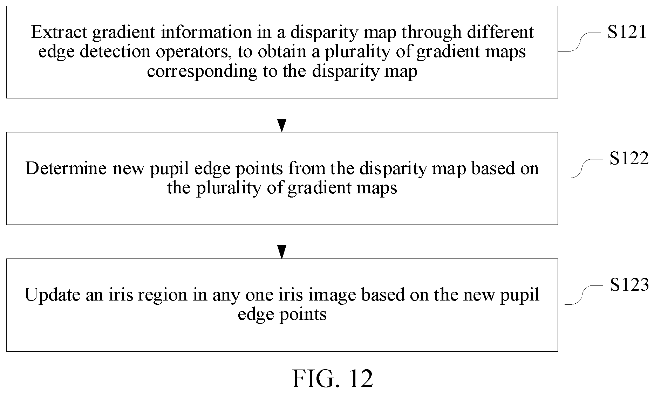

In some other embodiments, before feature extraction is performed on the iris region to obtain a corresponding iris feature, at least one disparity map may also be processed in the following manner, so as to update the iris region. For a specific process, reference is made to FIG. 12. FIG. 12 is a flowchart of a method for updating an iris region according to an embodiment of this disclosure, including blocks S121 to S124.

S121: Extract gradient information in a disparity map through different edge detection operators (for example, at least two edge detection operators) to obtain at least two gradient maps corresponding to the disparity map.

Each edge detection operator corresponds to a gradient map. A gradient element in the gradient map represents a change rate of a grayscale value of each pixel point in the disparity map.

S122: Determine new pupil edge points from the disparity map based on the at least two gradient maps.

In operation S121, for a disparity map, gradient calculation may be performed through at least two different edge detection operators. For example, the disparity map is processed through the Sobel operator, the Roberts operator, the Prewitt operator, the LoG operator, and the Canny operator. Then, operation S122 may be performed.

In some embodiments, when a plurality of edge detection operators are used simultaneously, gradient maps extracted through each of the edge detection operators may be fused. For example, weighted averaging may be performed on gradient magnitudes obtained by different operators. Based on the above, for a fused gradient map, a threshold is then applied to find new pupil edge points. In some embodiments, the threshold may be a fixed threshold previously set based on experience or through an experiment. In some other embodiments, the threshold may be a new threshold obtained through specific adjustment performed on the fixed threshold based on the fused gradient map and in combination with characteristics of different edge detection operators. In some other embodiments, the threshold may be a threshold selected in the foregoing listed manners such as the threshold selection method with a hysteresis effect or the adaptive threshold method. For details, reference may be made to the foregoing embodiments. Such details are not repeated herein.

A manner of fusing a gradient map is the same as a manner of fusing a disparity map. Such details are not repeated herein.

S123: Update an iris region in any one iris image based on the new pupil edge points.

Similar to the foregoing S103, in operation S123, after the new pupil edge point is determined, coordinates of extreme points of edge points in left and right fixed regions may be calculated through a least squares parabolic fitting method (or another fitting method), to obtain an initial center coordinate and a radius of the pupil and thus determine a new pupil edge.

Based on this, a preset edge distance is set around the new pupil edge in any one iris image. An annular region determined based on the new pupil edge and the preset edge distance is used as a new iris region. After the new iris region is extracted, an iris feature of the region is re-extracted. For a specific implementation, reference is made to the foregoing embodiments. Such details are not repeated herein.

Through the foregoing implementations, extraction of the iris feature may be optimized. In a case that texture information may be affected by factors, such as illumination and being blocked, a more accurate iris feature may also be effectively extracted to improve accuracy of subsequent recognition.

In some embodiments, after the iris feature is extracted, the iris feature may be compared with an iris feature already stored in a pre-constructed database, so as to identify an individual identity, for example, as described below.

S35: Perform identity recognition of the to-be-recognized object based on the iris feature. For example, an identity associated with the to-be-recognized object is determined based on the iris feature.

In one or more embodiments of this disclosure, a feature matching algorithm may be adopted in the recognition process. For example, a cosine distance, a Hamming distance, a Minkowski distance, or the like between two iris features is calculated to measure a similarity between two iris features, thereby determining whether the two iris features belong to the same individual.

An example in which the cosine distance between two iris features is calculated is used. The iris feature in one or more embodiments of this disclosure may be represented in a feature vector form. A cosine similarity between two feature vectors may be determined by calculating a dot product of two vectors and dividing the dot product by a product of modules of the two vectors, and then the obtained cosine similarity may be converted into a cosine distance. In this example, the obtained cosine distance is assumed to be a decimal number between 0 and 1, where 0 represents a same direction, and 1 represents an opposite direction.

If the cosine distance between two iris features is less than a specific threshold, the two iris features may be considered to match each other, and then identity information of the to-be-recognized object may be determined based on identity information corresponding to the matched iris features.

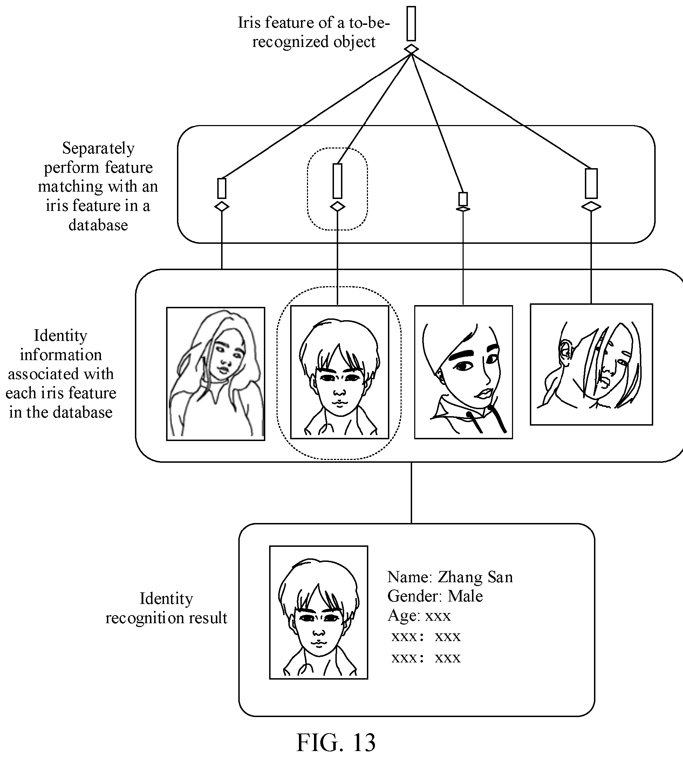

FIG. 13 shows a schematic diagram of a process of performing identity recognition on an object through feature matching according to an embodiment of this disclosure. Assuming that a database stores 4 iris features, as shown in FIG. 13, feature matching may be performed on an iris feature of a to-be-recognized object and each of the iris features in the database. If successful matching with a second feature is determined, identity information of the to-be-recognized object may be determined based on the identity information associated with each iris feature in the database, so as to identify the identity recognition of the to-be-recognized object. As shown in FIG. 13, an identity recognition result of the to-be-recognized object includes name, gender, age, and the like.

The foregoing listed database, the identity information in the database, and the like are merely simple examples. In an actual application, the iris features stored in the database may be more or less. Correspondingly, stored identity information may also be simpler or more complex. The foregoing is merely simple examples, which are not limited herein.

Based on the above, this disclosure recognizes that useful information included in an image of another type may be ignored if a type of an image is excessively relied on. To further improve accuracy of iris recognition, multi-source image information, such as an infrared image and a visible image, may be combined to improve accuracy of pupil edge locating, thereby improving accuracy of iris recognition.

In operation S31, iris images may be acquired in a plurality of image modes. The iris images are acquired from at least two acquisition perspectives in each image mode, so that at least two groups of iris images may be obtained, and each group of iris images corresponds to an image mode. To be specific, the at least two groups of iris images are divided into at least two candidate iris image sets. Each of the at least two groups of iris images includes at least two iris images acquired in one of at least two image modes, and each of the at least two candidate iris image sets includes candidate iris images which are the iris images acquired from the same acquisition perspective in the at least two image modes.

In the embodiment of this disclosure, different image modes may correspond to different manners of capturing and representing image data. For example, this disclosure includes, but is not limited to, the following image modes:
an RGB image mode, an infrared image mode, and a visible image mode.

An iris image acquired in the RGB image mode is an RGB image. This type of image is relatively common and is not further described herein.

An iris image acquired in the infrared image mode is an infrared image. Because a pupil has a relatively high transmittance to infrared light, the infrared image may highlight a pupil region.

An iris image acquired in the visible image mode is a visible image, and the visible image may clearly show a structure of an entire eye.

The infrared image and the visible image of the pupil may be collected simultaneously. This may be performed through a dedicated device. For example, a camera having an infrared mode and a visible light mode is used.

Before operation S32, the iris images in at least two image modes may also be fused, for example, as described below.

At least two groups of iris images are divided into candidate iris image sets corresponding to different acquisition perspectives.

Candidate iris images in each candidate iris image set are iris images acquired from the same acquisition perspective in different image modes.

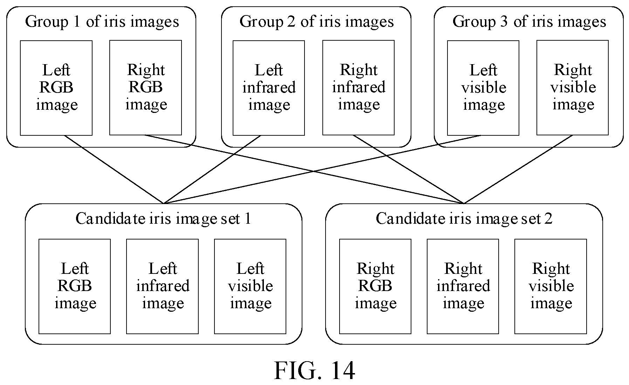

FIG. 14 shows a schematic diagram of logic for dividing a candidate iris image set according to an embodiment of this disclosure. FIG. 14 lists iris images acquired through a binocular camera in three image modes. Images acquired by two cameras of the binocular camera may be denoted as a left view and a right view. 3 groups of iris images are acquired in three image modes of RGB, infrared, and visible light. As shown in FIG. 14, a group 1 of iris images includes a left RGB image and a right RGB image, a group 2 of iris images includes a left infrared image and a right infrared image, and a group 3 of iris images includes a left visible image and a right visible image.

In one or more embodiments of this disclosure, a quantity of candidate iris image sets is consistent with a quantity of acquisition perspectives, and a quantity of candidate iris images in a candidate iris image set is consistent with a quantity of image modes. In other words, the iris images in the same candidate iris image set are the iris images acquired from the same acquisition perspective in different image modes.

As shown in FIG. 14, the binocular camera corresponds to two acquisition perspectives, and then, two candidate iris image sets may be obtained through division. For example, the candidate iris image set 1 includes the left RGB image, the left infrared image, and the left visible image; and the candidate iris image set 2 includes the right RGB image, the right infrared image, and the right visible image.

Then, for each pixel point, feature fusion is performed on corresponding pixel points on each candidate iris image in the same candidate iris image set to obtain a fused iris image.

In the process, feature fusion between images in one or more embodiments of this disclosure is that weighted averaging is performed on grayscale values of corresponding pixel points on each candidate iris image in the same candidate iris image set.

In an example, after the weighted averaging is performed on the grayscale values of the pixel points at the same position in the at least two candidate iris images, a grayscale value of the pixel point at the position may be obtained in a corresponding fused iris image. A weight when the weighted averaging is performed may be flexibly set based on an actual requirement, or may be determined through an experiment. For example, when an RGB image, an infrared image, and a visible image are fused, weights thereof may be all set to 1/3, which is not limited herein.

In some embodiments, for subsequent pupil edge locating, more attention may be paid to information in an infrared image because the infrared image may better highlight a pupil. Therefore, when the RGB image, the infrared image, and the visible image are fused, each weight is not set to 1/3. Instead, the weight of the infrared image is set to be higher than that of the other two. For example, the weights of the RGB image, the infrared image, and the visible image are set to 1/4, 1/2, and 1/4, respectively. For another example, the weights of the RGB image, the infrared image, and the visible image are set to 1/6, 1/2, and 1/3, respectively.

In addition, besides the grayscale value, other pixel features such as a color, transparency, brightness, and saturation may also be fused. Such details are not repeated herein.

In addition, to further improve accuracy of iris recognition, in addition to fusing multi-source images, the foregoing listed manners may also be configured to preprocess each iris image in each group of iris images. For example, preprocessing such as denoising and histogram equalization is performed on acquired images to improve image quality. For a specific implementation, reference may be made to the foregoing embodiments. Such details are not repeated herein.

Based on obtaining the fused iris image, when operation S32 is performed, stereo matching is performed between every two fused iris images to obtain a corresponding disparity map. Then, subsequent processes such as pupil edge locating, iris region determining, and iris feature extraction may be performed. For a specific implementation, reference may be made to the foregoing embodiments. Such details are not repeated herein.

In one or more embodiments of this disclosure, richer and accurate information may be obtained through fusion of multi-source images. Based on this, when a subsequent recognition process is performed through the fused image, recognition may be performed based on the richer and accurate information, thereby further improving accuracy of iris recognition.

A specific process of iris recognition is modularly described below through an example in which a binocular camera is configured to acquire a group of iris images (also referred to as an iris image pair) including two iris images.

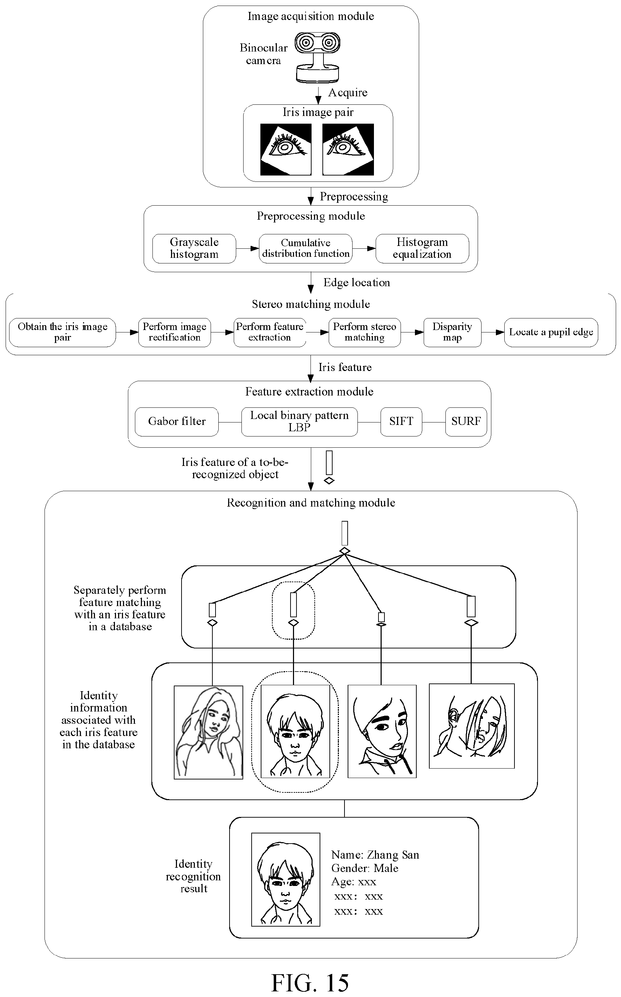

FIG. 15 shows a modular block diagram of an iris recognition process according to an embodiment of this disclosure. In an example, the foregoing process may be divided into the following modules: an image acquisition module, a preprocessing module, a stereo matching module, a feature extraction module, and a recognition and matching module.

The image acquisition module may acquire an iris image in the same eye region of a to-be-recognized object based on a binocular camera, to obtain an iris image pair shown in FIG. 15.

Then, each iris image in the iris image pair may be preprocessed through the preprocessing module to improve image quality. In an example, operations such as denoising and histogram equalization may be performed on the iris image to improve image quality. Histogram equalization is used as an example in FIG. 15. First, statistics may be performed on a grayscale histogram of an image. Based on this, a cumulative distribution function of each gray level is calculated. Finally, a grayscale value of an original image is mapped to a new grayscale value through the cumulative distribution function, so that a grayscale distribution of the new image is more uniform, thereby completing a histogram equalization process.

After the histogram equalization processing, the contrast of the image is improved and an iris texture is clearer, facilitating subsequent pupil edge locating and feature extraction operations.

The stereo matching module may precisely locate a pupil edge through a stereo matching algorithm. The process may be simply summarized as: obtaining an iris image pair; rectifying an image where before stereo matching is performed, the image may be rectified to eliminate a disparity between a left eye image and a right eye image; and then, performing feature extraction, and extracting pupil feature points in a rectified image to facilitate matching. After the feature points are extracted, the stereo matching algorithm may be used to find corresponding points in the left eye image and the right eye image and obtain a disparity map. After the disparity map is obtained, a pupil edge may be located by calculating depth information of the pupil to determine a position thereof. For a specific implementation, reference may be made to the foregoing embodiments. Such details are not repeated herein.

The feature extraction module may extract an iris feature based on one or more manners listed in FIG. 15 for a subsequent recognition and matching process. For a specific implementation, reference may be made to the foregoing embodiments. Such details are not repeated herein.

The recognition and matching module may perform feature matching on the extracted iris feature and an iris feature in a database to obtain an identity recognition result. For a specific implementation, reference may be made to the foregoing embodiments. Such details are not repeated herein.

Based on the above, through the iris recognition method in one or more embodiments of this disclosure, a pupil edge locating error may be effectively reduced, improving iris recognition accuracy. An improved recognition effect may still be achieved in complex conditions such as a pupil size change, a light change, and a blurred pupil edge.

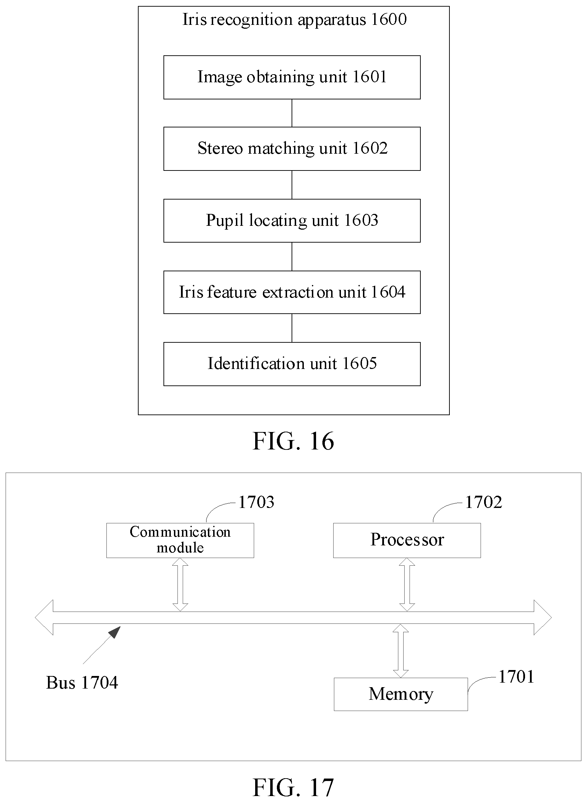

Based on one or more aspects described above, one or more embodiments of this disclosure further provide iris recognition apparatuses. FIG. 16 shows a schematic structural diagram of an iris recognition apparatus 1600, and the apparatus may include:
an image obtaining unit 1601, configured to obtain a group of iris images acquired for a to-be-recognized object; the group of iris images including at least two iris images acquired from different acquisition perspectives for the same eye region of the to-be-recognized object;
a stereo matching unit 1602, configured to perform stereo matching on the at least two iris images to obtain a disparity map between these iris images, the disparity map including a disparity element, each disparity element representing a displacement amount in a specified direction of two pixel points corresponding to the same eye region element (e.g., a target element in the eye region) in these iris images;
a pupil locating unit 1603, configured to determine a pupil edge in one of the at least two iris images based on the displacement amount;
an iris feature extraction unit 1604, configured to determine an iris region in the iris image based on the pupil edge, and perform feature extraction on the iris region to obtain a corresponding iris feature; and
a recognition unit 1605, configured to perform identity recognition on the to-be-recognized object based on the iris feature.

In some embodiments, the stereo matching unit 1602 is configured to:
eliminate a disparity between these iris images by rectifying the at least two iris images;
separately extract pupil feature points from each rectified iris image;
determine pixel points (i.e., corresponding points) corresponding to the same eye region element (e.g., a target element in the eye region) from the extracted pupil feature points through stereo matching; and
obtain a disparity map between the at least two iris images based on a position of the determined corresponding points in corresponding iris images.

In some embodiments, the pupil locating unit 1603 is configured to:
locate, if one disparity map is obtained, a pupil edge from any one iris image included in the group of iris images based on the disparity map; and
perform, if at least two disparity maps are obtained, image fusion on the at least two disparity maps and locate the pupil edge in one of the at least two iris images based on a fused disparity map; or locate, based on each disparity map, a pupil edge in an iris image corresponding to the disparity map, and fuse at least two determined pupil edges to obtain a fused pupil edge.

In some embodiments, the pupil locating unit 1603 is configured to:
locate a pupil edge from an iris image based on a disparity map in the following manner:
extracting gradient information in the disparity map through an edge detection operator to obtain a gradient map corresponding to the disparity map, a gradient element in the gradient map representing a change rate of a value of each of disparity elements in the disparity map;
determining pupil edge points from the disparity map based on a preset gradient threshold; and
locating a pupil edge from an iris image based on the determined pupil edge points.

In some embodiments, the iris feature extraction unit 1604 is configured to:
determine, as the iris region, an annular region having a preset width outside the pupil edge in the iris image. For example, a preset edge distance is set around a pupil edge in any one iris image. An annular region determined based on the pupil edge and the preset edge distance is used as an iris region in any one iris image.

In some embodiments, the iris feature extraction unit 1604 is configured to perform at least one of the following operations:
performing feature extraction on the iris region through filters of different scales and directions to obtain response values corresponding to the filters; and combining the response values extracted through the filters to form an iris feature corresponding to the iris region; or
comparing a grayscale value of each pixel point in an iris region with that of an adjacent pixel point to extract the iris feature corresponding to the iris region.

In some embodiments, the iris feature extraction unit 1604 is further configured to, before feature extraction is performed on the iris region to obtain a corresponding iris feature, enhance contrast of the iris region.

In some embodiments, the iris feature extraction unit 1604 is further configured to, before the feature extraction is performed on the iris region to obtain the corresponding iris feature, process at least one disparity map in the following manner to update the iris region:
extracting gradient information in a disparity map through different edge detection operators to obtain at least two gradient maps corresponding to the disparity map, each edge detection operator corresponding to a gradient map and a gradient element in the gradient map representing a change rate of a grayscale value of each pixel point in the disparity map;
determining new pupil edge points from the disparity map based on at least two gradient maps; and
updating an iris region in any one iris image based on the new pupil edge points.

In some embodiments, if at least two groups of iris images are provided and each group of iris images corresponds to an image mode, before stereo matching is separately performed between every two iris images to obtain a corresponding disparity map, the stereo matching unit 1602 is further configured to:
divide at least two groups of iris images into at least two candidate iris image sets, the candidate iris images in each candidate iris image set being iris images acquired from the same acquisition perspective in at least two image modes; and
perform, for each pixel point, feature fusion on corresponding pixel points on each candidate iris image in the same candidate iris image set to obtain a fused iris image.

The stereo matching unit 1602 is configured to:
separately perform stereo matching between every two fused iris images to obtain a disparity map corresponding to every two fused iris images.

In some embodiments, the image mode includes part or all of the following:
an RGB image mode, an infrared image mode, and a visible image mode.

In some embodiments, the stereo matching unit 1602 is configured to:
perform weighted averaging on grayscale values of corresponding pixel points on each candidate iris image in the same candidate iris image set.

In some embodiments, before separately performing stereo matching between every two iris images to obtain a corresponding disparity map, the stereo matching unit 1602 is further configured to:
perform, for each iris image in a group of iris images, image enhancement processing on the iris image in at least one manner.

In embodiments, the foregoing units may respectively perform operations corresponding to the functions of the units in the methods in embodiments. Therefore, for the operations performed by the units, reference may be made to the descriptions of the operations in embodiments. Such details are not repeated herein.

For ease of description, the foregoing parts are divided into modules (or units) based on their functions and described separately. During implementation of this disclosure, the functions of the modules (units) may be implemented in the same piece of or two pieces of software or hardware.

In one or more embodiments of this disclosure, a term "module" or "unit" may correspond to a computer program or a part of the computer program that has a predetermined function and operates together with another relevant part to achieve a predetermined goal, and may be entirely or partially implemented by using software, hardware (such as a processing circuit or a memory), or a combination thereof. Similarly, one processor (or two processors or memories) may be configured to implement one or two modules or units. In addition, each module or unit may be a part of an overall module or unit including a function of the module or unit.

After one or more examples of the iris recognition method and apparatus in this disclosure are described, one or more examples of an electronic device this disclosure are described below.

A person skilled in the art can understand that each aspect of this disclosure may be implemented as a system, a method, or a program product. Therefore, each aspect of this disclosure may be implemented in the following forms: a hardware implementation, a software implementation (including firmware, microcode, and the like), or an implementation combining hardware and software aspects, which may be collectively referred to as a "circuit", a "module", or a "system" herein.

Based on one or more aspects described above, an electronic device is further provided in this disclosure. In an embodiment, the electronic device may be a server. In this embodiment, a structure of the electronic device may be shown in FIG. 17, including a memory 1701, a communication module 1703, and one or two processors 1702.

The memory 1701 is configured to store a computer program executed by the processor 1702. The memory 1701 may include a program storage area and a data storage area. The program storage area may store an operating system and a program required for running an instant messaging function, and the like. The data storage area may store various instant messaging information, an operation instruction set, and the like.

The memory 1701 may include a volatile memory, such as a random-access memory (RAM). The memory 1701 may include a non-volatile memory, for example, a read-only memory (ROM), a flash memory, a hard disk drive (HDD), or a solid-state drive (SSD). Alternatively, the memory 1701 is any other medium that can carry or store a desired computer program in a form of instructions or a data structure and that can be accessed by a computer. However, this is not limited thereto. The memory 1701 may be a combination of the foregoing memories.

The processor 1702 may include one or two central processing units (CPUs), a digital processing unit, or the like. The processor 1702 is configured to implement the foregoing iris recognition method when invoking the computer program stored in the memory 1701.

The communication module 1703 is configured to communicate with a terminal device and another server.

The connection media among the memory 1701, the communication module 1703, and the processor 1702 above are not limited in this disclosure. In one or more embodiments of this disclosure, in FIG. 17, the memory 1701 and the processor 1702 are connected through a bus 1704. The bus 1704 is depicted by a bold line in FIG. 17. A manner of connection between other components is merely an example for description, and this disclosure is not limited thereto. The bus 1704 may be divided into an address bus, a data bus, a control bus, and the like. For ease of description, only one bold line is configured to describe the bus in FIG. 17, but this does not mean that only one bus or only one type of bus exists.

The memory 1701 may include a non-transitory computer-readable storage medium. The non-transitory computer-readable storage medium has computer-executable instructions stored therein. The computer-executable instructions are configured to implement the iris recognition method in one or more embodiments of this disclosure. The processor 1702 is configured to perform the foregoing iris recognition method, as shown in FIG. 3.

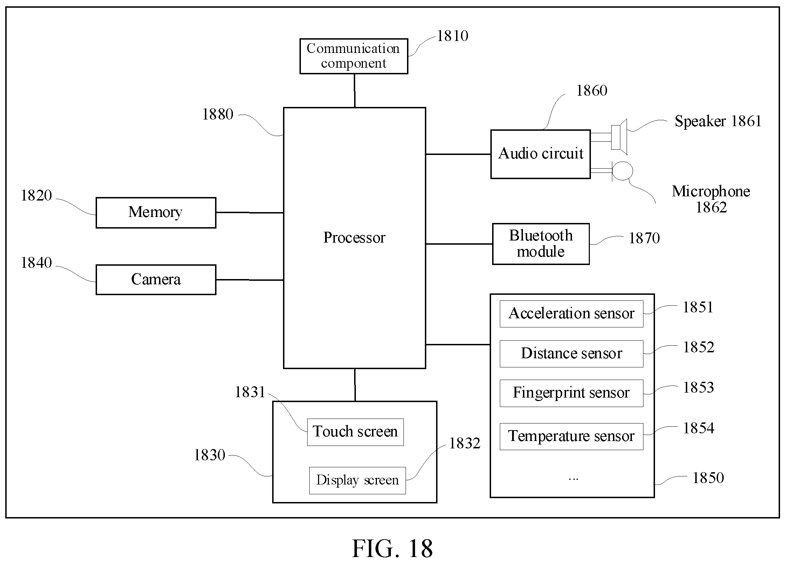

In another embodiment, the electronic device may also be another electronic device, such as a terminal device. In the embodiment, a structure of the electronic device may be shown in FIG. 18, including components, such as a communication component 1810, a memory 1820, a display unit 1830, a camera 1840, a sensor 1850, an audio circuit 1860, a Bluetooth module 1870, and a processor 1880.

The memory 1820 may be configured to store a software program and data. The processor 1880 executes various functions and data processing of the terminal device 110 by running the software program or data stored in the memory 1820. The memory 1820 may include a high-speed RAM and may include a non-volatile memory, such as at least one magnetic disk storage device, a flash memory device, or another volatile solid-state storage device. The memory 1820 stores an operating system causing the terminal device 110 to run. In this disclosure, the memory 1820 may store the operating system and various application programs and may further store a computer program that performs the iris recognition method in one or more embodiments of this disclosure.

The display unit 1830 may also be configured to display information inputted by a user or information provided for a user, and a graphical user interface (GUI) of various menus of the terminal device 110. The display unit 1830 may include a display screen 1832 arranged on a front surface of the terminal device 110. The display unit 1830 may be configured to display the identity recognition result in one or more embodiments of this disclosure. The display unit 1830 may include a touch screen 1831 arranged on the front surface of the terminal device 110, and the touch screen may collect touch operations on or near the touch screen, for example, clicking a button and dragging a scroll box.

The terminal device may further include at least one sensor 1850, for example, an acceleration sensor 1851, a distance sensor 1852, a fingerprint sensor 1853, or a temperature sensor 1854.

An audio circuit 1860, a loudspeaker 1861, and a microphone 1862 may provide an audio interface between the user and the terminal device 110. The processor 1880 is a control center of the terminal device and connected to various parts of an entire terminal through various interfaces and lines, and is configured to perform various functions of the terminal device and process data by running or executing the software program stored in the memory 1820 and invoking the data stored in the memory 1820. In some embodiments, the processor 1880 may include one or two processing units. The processor 1880 may further be integrated with an application processor and a baseband processor. The application processor may process an operating system, a user interface, an application program, and the like. The baseband processor may process wireless communication. The baseband processor may also not be integrated in the processor 1880. In this disclosure, the processor 1880 may run the operating system, the application program, a user interface display, a touch response, and the iris recognition method in one or more embodiments of this disclosure. In addition, the processor 1880 is coupled to the display unit 1830.

In some implementations, the aspects of the iris recognition method provided in this disclosure may also be implemented in the form of a program product which includes a computer program. When the program product is run on an electronic device, the computer program is configured to cause the electronic device to perform the operations in the iris recognition method according to various examples of this disclosure described above in the specification. For example, the electronic device may perform the operations shown in FIG. 3.

The program product may be any combination of one or two readable media. The readable medium may be a readable signal medium or a readable storage medium. The readable storage medium may be, for example, but is not limited to, an electric, magnetic, optical, electromagnetic, infrared, or semi-conductive system, apparatus, or device, or any combination thereof. More examples (a non-exhaustive list) of the readable storage medium include: an electrical connection with one or two wires, a portable disk, a hard disk, an RAM, an ROM, an erasable programmable ROM (EPROM or a flash memory), an optical fiber, a portable compact disk read-only memory (CD-ROM), an optical memory device, a magnetic storage device, or any appropriate combination thereof.

The program product of the implementations of this disclosure may be a CD-ROM and include a computer program, and may be run on an electronic device. However, the program product in this disclosure is not limited thereto. In this disclosure, the readable storage medium may be any tangible medium including or storing a program, and the program may be used by or used in combination with a command execution system, an apparatus, or a device.

The readable signal medium may include a data signal being in a baseband or transmitted as a part of a carrier, which carries a readable computer program. The propagated data signal may be in various forms, including but not limited to an electromagnetic signal, an optical signal, or any suitable combination thereof. The readable storage medium may alternatively be any readable medium other than a readable storage medium, and the readable storage medium may be configured to transmit, propagate, or convey a program used by or in combination with a command execution system, an apparatus, or a device.

The computer program included in the readable medium may be transmitted through any suitable medium, including but not limited to a wireless medium, a wired medium, an optical cable, an RF, or the like, or any suitable combination thereof.

The computer program configured to perform the operations of this disclosure may be written in any combination of one or more programming languages. The programming languages include object-oriented programming languages such as Java and C++, and further include procedural programming languages such as a "C" language or similar programming languages. The computer program may be executed on a user's electronic device, partially executed on the user's electronic device, executed as an independent software package, partially executed on the user's electronic device and partially executed on a remote electronic device, or executed on the remote electronic device or a server. In a case involving the remote electronic device, the remote electronic device may be connected to a user electronic device through any type of network including a local area network (LAN) or a wide area network (WAN), or may be connected to an external electronic device (for example, connected to the external electronic device through the Internet by using an Internet service provider).

Although several units or subunits of the apparatus are mentioned in the foregoing detailed descriptions, such division is a non-limiting example and not mandatory. In some examples, based on the implementations of this disclosure, features and functions of two or more units described above may be incorporated in one unit. On the contrary, the features or the functions of one unit described above may further be divided and implemented by two or more units.

In addition, although the operations of the method in this disclosure are described in a specific order in the accompanying drawings, this does not require or imply that the operations are bound to be performed in the specific order, or all the operations shown are bound to be performed to achieve the desired result. Additionally or alternatively, some operations may be omitted, two operations may be combined into one operation for execution, and/or one operation may be decomposed into two operations for execution.

A person skilled in the art can understand that one or more embodiments of this disclosure may be provided as a method, a system, or a computer program product. Therefore, this disclosure may be implemented in the form of a fully hardware-based embodiment, a fully software-based embodiment, or an embodiment combining both software and hardware aspects. In addition, this disclosure may be in the form of a computer program product implemented on one or two computer-usable storage media (including but not limited to a disk memory, a CD-ROM, an optical memory, and the like) that includes a computer-usable computer program.

This disclosure is described with reference to the flowcharts and/or block diagrams of the method, the device (system), and the computer program product in one or more embodiments of this disclosure. Each process and/or each block in the flowcharts and/or the block diagrams and a combination of the process and/or the block in the flowcharts and/or the block diagrams may be implemented by computer program commands. These computer program commands may be provided to a general-purpose computer, a dedicated computer, an embedded processor, or a processor of another programmable data processing device to generate a machine, so that commands executed by the computer or the processor of the another programmable data processing device generate an apparatus for implementing functions specified in one or two processes in the flowcharts and/or in one or two blocks in the block diagrams.

The computer program commands may also be stored in a computer-readable memory that can direct a computer or another programmable data processing device to operate in a specific manner, so that the commands stored in the computer-readable memory generate a product that includes a command apparatus. The command apparatus implements functions specified in one or two processes in the flowcharts and/or in one or two blocks in the block diagrams.

The computer program commands may also be loaded onto a computer or another programmable data processing device, so that a series of operations and steps are performed on the computer or the another programmable device to generate a computer-implemented process. Therefore, commands executed on the computer or the another programmable device provide steps for implementing the functions specified in one or two processes in the flowcharts and/or in one or two blocks in the block diagrams.

Technical features of the foregoing embodiments may be combined in different manners to form other embodiments. To make the description concise, not all possible combinations of the technical features in the foregoing embodiments are described. However, these technical features may be combined in any manner provided that no conflict exists.

Based on the above, the scope of the disclosure is not limited to the implementations in the examples described above, and the specification is interpreted in the broadest sense as a whole.

## Claims

1. An iris recognition method, performed by an electronic device, the method comprising:
obtaining a plurality of iris images corresponding to a first object, the plurality of iris images including at least two iris images acquired from different acquisition perspectives with respect to an eye region of the first object;
obtaining a disparity map between the at least two iris images through a stereo matching process, the disparity map including a disparity element representing a displacement amount in a displacement direction between two pixel points corresponding to a first element in the eye region in the at least two iris images;
determining, in a first iris image that is one of the at least two iris images, a pupil edge based on the displacement amount;
determining an iris region in the first iris image based on the pupil edge;performing feature extraction on the iris region to obtain an iris feature for determining an identity associated with the first object.

2. The method according to claim 1, wherein the obtaining the disparity map comprises:
rectifying the at least two iris images to remove or reduce a disparity between the at least two iris images;
extracting pupil feature points from each of the at least two rectified iris images;
determining a pixel point in each of the at least two rectified iris images corresponding to the first element from the extracted pupil feature points through the stereo matching process; and
obtaining the disparity map between the at least two iris images based on a position of the determined pixel point in each of the at least two iris images.

3. The method according to claim 1, further comprising:
performing, when at least two disparity maps are obtained, image fusion on the at least two disparity maps to obtain a fused disparity map, each of the at least two disparity maps being obtained from two corresponding iris images in the plurality of iris images,
wherein determining the pupil edge comprises:
determining the pupil edge in the first iris image based on a position where a change in the displacement amount in the fused disparity map meets a preset condition.

4. The method according to claim 1, wherein the determining the pupil edge comprises:
determining, when at least two disparity maps are obtained from two corresponding iris images in the plurality of iris images, a position in an iris image corresponding to each of the at least two disparity maps where a change in a displacement amount in the respective disparity map meets a preset condition as an initial pupil edge corresponding to the respective disparity map; and
fusing at least two determined initial pupil edges to obtain a fused pupil edge, the pupil edge in the first iris image being determined based on the fused pupil edge.

5. The method according to any one of claims 1 to 4, wherein the determining the pupil edge comprises:
extracting gradient information in the disparity map through an edge detection operator to obtain a gradient map corresponding to the disparity map, a gradient element in the gradient map representing a change rate of a value of each disparity element in the disparity map;
determining pupil edge points in the disparity map based on the gradient map and a preset gradient threshold; and
locating the pupil edge from the first iris image based on the pupil edge points.

6. The method according to any one of claims 1 to 4, wherein the determining the pupil edge comprises:
extracting gradient information in the disparity map through at least two edge detection operators to obtain at least two gradient maps of the disparity map, the at least two gradient maps being in one-to-one correspondence with the at least two edge detection operators, and a gradient element in the gradient map representing a change rate of a value of each disparity element in the disparity map; and
fusing the at least two gradient maps to obtain a fused gradient map;
determining pupil edge points in the disparity map based on the fused gradient map; and
locating the pupil edge from the first iris image based on the pupil edge points.

7. The method according to any one of claims 1 to 4, wherein the determining the iris region comprises:
determining, as the iris region, an annular region having a preset width outside the pupil edge in the first iris image.

8. The method according to any one of claims 1 to 4, wherein the performing the feature extraction comprises at least one of:
performing feature extraction on the iris region through filters of different scales and directions to obtain response values corresponding to the filters, and combining the response values of the filters to form an iris feature corresponding to the iris region; or
comparing a grayscale value of each pixel point in the iris region with that of an adjacent pixel point, and determining a comparison result as the iris feature corresponding to the iris region.

9. The method according to claim 6 or 7, further comprising:
enhancing contrast of the iris region before the performing feature extraction on the iris region to obtain the iris feature.

10. The method according to any one of claims 1 to 4, further comprising:
dividing at least two groups of iris images included in the plurality of iris images into at least two candidate iris image sets, each of the at least two groups of iris images including at least two iris images obtained based on one of at least two image modes, and each of the at least two candidate iris image sets including iris images obtained from a same acquisition perspective based on the at least two image modes;
obtaining a fused iris image for each candidate iris image set, each pixel point of the fused iris image being based on performing feature fusion on corresponding pixel points of each candidate iris image in the candidate iris image set,
wherein the obtaining the disparity map comprises:
performing stereo matching on two of the fused iris images to obtain the disparity map corresponding to the two of the fused iris images.

11. The method according to claim 10, wherein the image modes comprise part or all of the following:
an RGB image mode, an infrared image mode, and a visible image mode.

12. The method according to claim 10, whereinperforming the feature fusion comprises:
performing weighted averaging on grayscale values of the corresponding pixel points on each candidate iris image in the same candidate iris image set.

13. The method according to any one of claims 1 to 4, further comprising:
performing image enhancement processing on each iris image in the plurality of iris images before the stereo matching process.

14. An iris recognition apparatus, comprising:
an image obtaining unit, configured to obtain a group of iris images acquired for a first object; the group of iris images comprising at least two iris images acquired from different acquisition perspectives for the same eye region of the first object;
a stereo matching unit, configured to perform stereo matching on the at least two iris images to obtain a disparity map between the at least two iris images, the disparity map comprising a disparity element, the disparity element representing a displacement amount in a specified direction between two pixel points corresponding to a first element in the at least two iris images;
a pupil locating unit, configured to determine, in a first iris image of the at least two iris images, a pupil edge based on the displacement amount;
an iris feature extraction unit, configured to determine an iris region in the first iris image based on the pupil edge, and perform feature extraction on the iris region to obtain an iris feature for a recognition unit to perform identity recognition on the to-first object.

15. An electronic device, comprising a processor and a memory, the memory having a computer program stored therein, the computer program, when executed by the processor, causing the processor to perform the operations of the method according to any one of claims 1 to 13.

16. A computer-readable storage medium, comprising a computer program, the computer program, when run on an electronic device, causing the electronic device to perform the operations of the method according to any one of claims 1 to 13.

17. A computer program product, comprising a computer program, when a processor of an electronic device reads the computer program from the computer-readable storage medium, the processor executing the computer program, causing the electronic device to perform the operations of the method according to any one of claims 1 to 13.
